# EUROPEAN PATENT APPLICATION

(11) **EP 4 513 778 A1**
(43) Date of publication of application: **26.02.2025**
(21) Application number: 23792045.9
(22) Date of filing: 27.03.2023
(51) Int. Cl.: H04B 7/06, H04B 7/08, H04B 17/318, H04B 17/336, H04L 5/00, H04W 72/23

(54) **METHOD AND DEVICE FOR TRANSMITTING/RECEIVING CHANNEL STATE INFORMATION IN WIRELESS COMMUNICATION SYSTEM**

(30) Priority: 21.04.2022 KR 20220049769
(71) Applicant: LG Electronics Inc., Yeongdeungpo-gu Seoul 07336 (KR)
(72) Inventor: KANG, Jiwon, Seoul 06772 (KR); KIM, Seonwook, Seoul 06772 (KR); AHN, Joonkui, Seoul 06772 (KR); YANG, Suckchel, Seoul 06772 (KR)
(74) Representative: Plasseraud IP
(86) International application number: PCT/KR2023/004012
(87) International publication number: WO 2023/204465

(57) **Abstract**

A method and a device for transmitting/receiving channel state information in a wireless communication system are disclosed. The method according to one embodiment of the present disclosure may comprise the steps of: receiving configuration information related to a CSI report from a base station; receiving a downlink RS in a plurality of RS resources from the base station; and transmitting, to the base station, the CSI report including a report value calculated on the basis of the downlink RS.

## Description

### [Technical Field]

The present disclosure relates to a wireless communication system, and in more detail, relates to a method and an apparatus of transmitting and receiving channel state information in a wireless communication system.

### [Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

A technical object of the present disclosure is to provide a method and an apparatus for transmitting and receiving channel state information (CSI) (including beam reporting).

In addition, an additional technical object of the present disclosure is to provide a method and an apparatus for managing a beam according to information that notifies in advance that the beam will be changed (to-be-turned-on and/or to-be-turned-off indication information).

The technical objects to be achieved by the present disclosure are not limited to the above-described technical objects, and other technical objects which are not described herein will be clearly understood by those skilled in the pertinent art from the following description.

### [Technical Solution]

A method performed by a user equipment (UE) in a wireless communication system according to an aspect of the present disclosure may include: receiving, from a base station, configuration information related to a channel state information (CSI) report; receiving, from the base station, a downlink RS on a plurality of reference signal (RS) resources; and transmitting, to the base station, the CSI report including a report value calculated based on the downlink RS. The report value may be derived based on the plurality of RS resources based on information indicating that one or more first RS resources are to-be-turned-on and/or information indicating that one or more second RS resources are to-be-turned-off.

A method performed by a base station in a wireless communication system according to an additional aspect of the present disclosure may include: transmitting, to a user equipment (UE), configuration information related to a channel state information (CSI) report; transmitting, to the UE, a downlink RS on a plurality of reference signal (RS) resources; and receiving, from the UE, the CSI report including a report value calculated based on the downlink RS. The report value may be derived based on the plurality of RS resources based on information indicating that one or more first RS resources are to-be-turned-on and/or information indicating that one or more second RS resources are to-be-turned-off.

### [Technical Effects]

According to an embodiment of the present disclosure, energy consumption of a network can be reduced by turning a beam on or off depending on a wireless environment.

In addition, according to an embodiment of the present disclosure, an optimized transmission/reception beam can be found in advance before a serving beam is changed by considering information indicating in advance that the beam will be changed (to-be-turned-on and/or to-be-turned-off indication information).

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates physical channels used in a wireless communication system to which the present disclosure may be applied and a general signal transmission and reception method using them.
FIG. 3 is a diagram which illustrates a downlink beam management operation in a wireless communication system to which the present disclosure may be applied.
FIG. 4 is a diagram which illustrates a downlink beam management procedure using SSB in a wireless communication system to which the present disclosure may be applied.
FIG. 5 is a diagram which illustrates a downlink beam management operation using CSI-RS in a wireless communication system to which the present disclosure may be applied.
FIG. 6 is a diagram which illustrates an Rx beam determination process of a terminal in a wireless communication system to which the present disclosure may be applied.
FIG. 7 is a diagram which illustrates a Tx beam determination process of a base station in a wireless communication system to which the present disclosure may be applied.
FIG. 8 is a diagram which illustrates resource allocation in a time and frequency domain related to a downlink beam management operation in a wireless communication system to which the present disclosure may be applied.
FIG. 9 is a diagram which illustrates an uplink beam management operation using SRS in a wireless communication system to which the present disclosure may be applied.
FIG. 10 is a diagram which illustrates an uplink beam management procedure in a wireless communication system to which the present disclosure may be applied.
FIG. 11 is a diagram illustrating multi panel terminals in a wireless communication system to which the present disclosure may be applied.
FIG. 12 is a diagram illustrating a signaling procedure between a base station and a UE for a beam management method according to an embodiment of the present disclosure.
FIG. 13 is a diagram illustrating an operation of a UE for reporting channel state information according to an embodiment of the present disclosure.
FIG. 14 is a diagram illustrating an operation of a base station for reporting channel state information according to an embodiment of the present disclosure.
FIG. 15 illustrates a block diagram of a wireless communication device according to an embodiment of the present disclosure.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

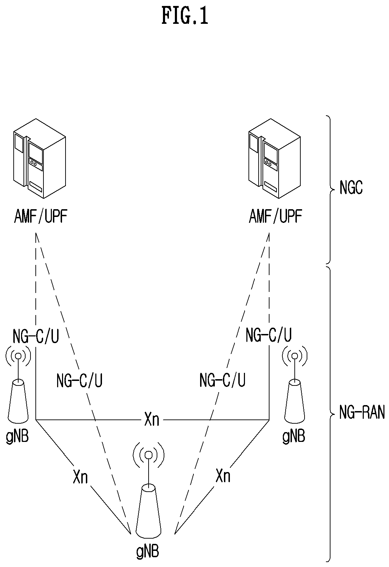

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

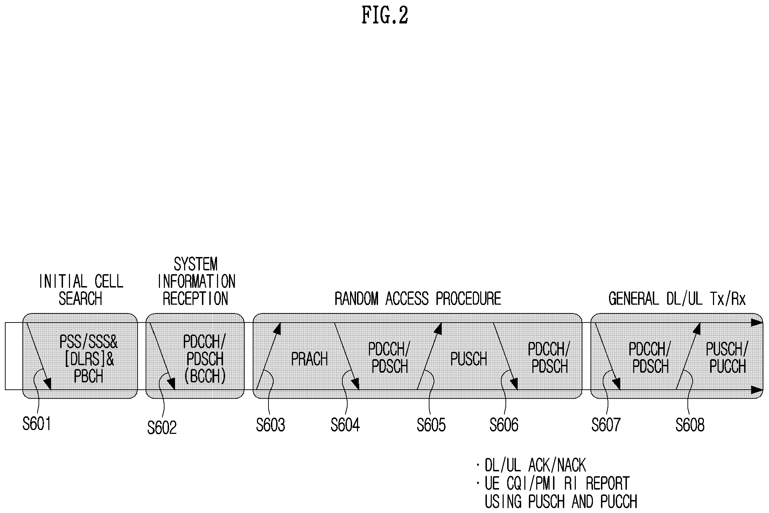

FIG. 2 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block (TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS (sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

### beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

Beam measurement: An operation that a base station or a UE measures a property of a received beamformed signal

Beam determination: An operation that a base station or a UE selects its Tx beam / Rx beam

Beam sweeping: An operation that a spatial region is covered by using a Tx and/or Rx beam for a certain time interval in a pre-determined method

Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier) (s) and corresponding L1-RSRP (Reference Signal Received Power) .

The DL RS ID may be a SSBRI(SSB Resource Indicator) or a CRI(CSI-RS Resource Indicator).

Hereinafter, a DL BM procedure using an SSB will be described.

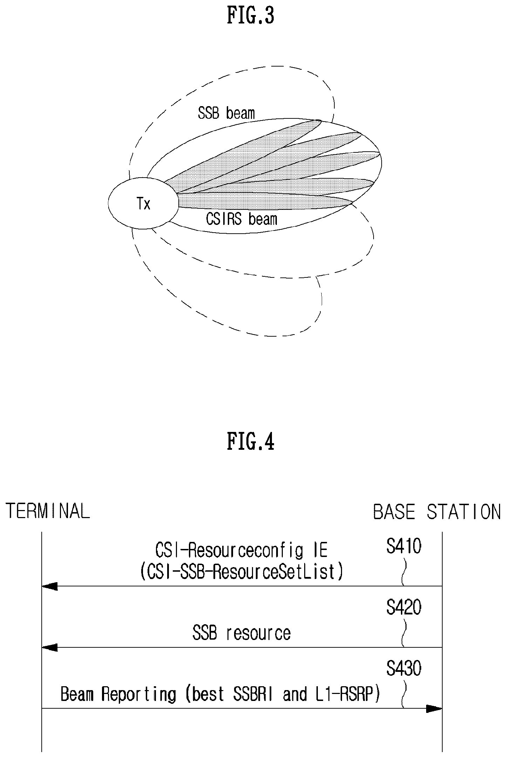

FIG. 3 is a diagram which illustrates a downlink beam management operation in a wireless communication system to which the present disclosure may be applied.

In reference to FIG. 3, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both of Tx beam sweeping and Rx beam sweeping.

Rx beam sweeping using an SSB may be performed while an UE changes an Rx beam for the same SSBRI across a plurality of SSB bursts. In this case, one SS burst includes one or more SSBs and one SS burst set includes one or more SSB bursts.

FIG. 4 is a diagram which illustrates a downlink beam management procedure using SSB in a wireless communication system to which the present disclosure may be applied.

A configuration on a beam report using an SSB is performed in a CSI/beam configuration in a RRC connected state (or a RRC connected mode).

In reference to FIG. 4, a terminal receives CSI-ResourceConfig IE including CSI-SSB-ResourceSetList including SSB resources used for BM from a base station (S410).

Table 2 represents an example of CSI-ResourceConfig IE and as in Table 6, a BM configuration using an SSB configures an SSB like a CSI-RS resource without being separately defined.

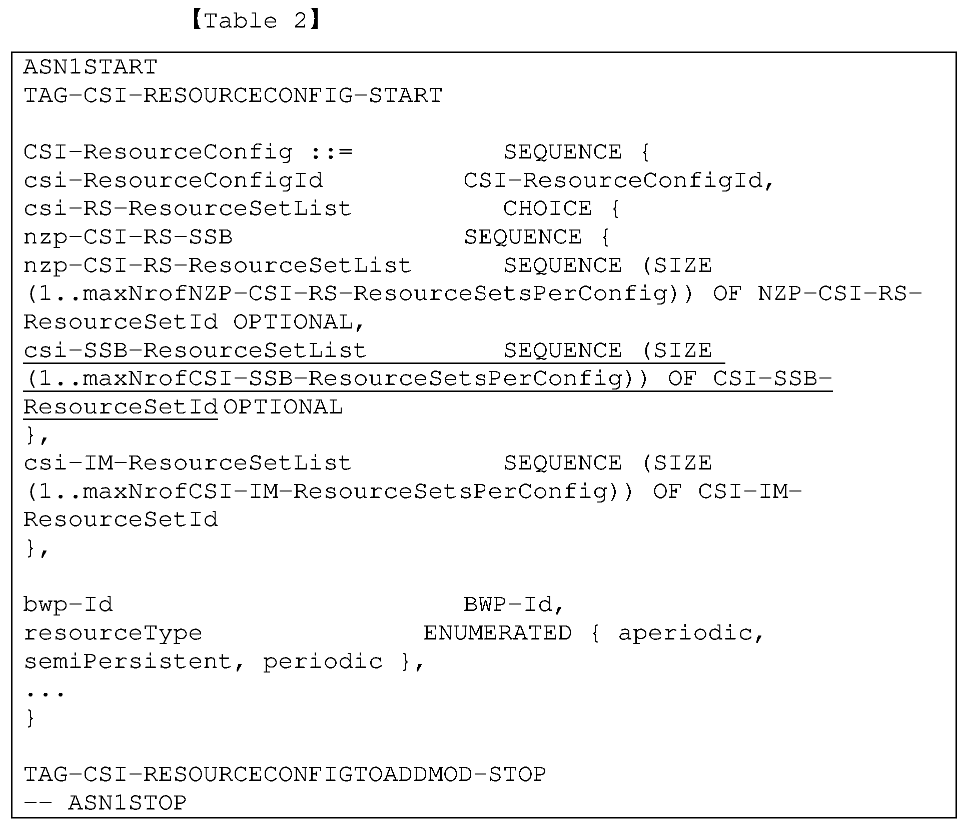

In Table 2, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined from 0 to 63.

A terminal receives an SSB resource from the base station based on the CSI-SSB-ResourceSetList (S420).

When CSI-RS reportConfig related to a report on a SSBRI and L1-RSRP is configured, the terminal performs (beam) reporting of the best SSBRI and corresponding L1-RSRP to a base station (S430) .

Hereinafter, a DL BM procedure using a CSI-RS will be described.

Describing a usage of a CSI-RS, i) a repetition parameter is configured for a specific CSI-RS resource set and when TRS_info is not configured, a CSI-RS is used for beam management. ii) when a repetition parameter is not configured and TRS_info is configured, a CSI-RS is used for a TRS(tracking reference signal). iii) when a repetition parameter is not configured and TRS_info is not configured, a CSI-RS is used for CSI acquisition.

Such a repetition parameter may be configured only for CSI-RS resource sets associated with CSI-ReportConfig having a report of L1 RSRP or 'No Report(or None)'.

If a terminal is configured with CSI-ReportConfig in which reportQuantity is configured as 'cri-RSRP' or 'none' and CSI-ResourceConfig for channel measurement (a higher layer parameter resourcesForChannelMeasurement) does not include a higher layer parameter 'trs-Info' and includes NZP-CSI-RS-ResourceSet in which a higher layer parameter 'repetition' is configured, the terminal may be configured only with a same number of port (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted with the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted in a different OFDM symbol. In addition, a terminal does not expect to receive a different periodicity in periodicityAndOffset in all CSI-RS resources in NZP-CSI-RS-Resourceset.

Meanwhile, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted in the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and corresponding L1-RSRP to a base station.

In addition, when a CSI-RS resource may be configured in the same OFDM symbol(s) as an SSB(SS/PBCH Block) and 'QCL-TypeD' is applicable, the terminal may assume that a CSI-RS and an SSB are quasi co-located with regard to 'QCL-TypeD'.

Here, the QCL TypeD may mean that antenna ports are quasi-colocated with regard to a spatial Rx parameter. When a terminal receives a plurality of DL antenna ports in a QCL Type D relationship, it is allowed to apply the same Rx beam. In addition, a terminal does not expect that a CSI-RS will be configured in a RE overlapped with a RE of an SSB.

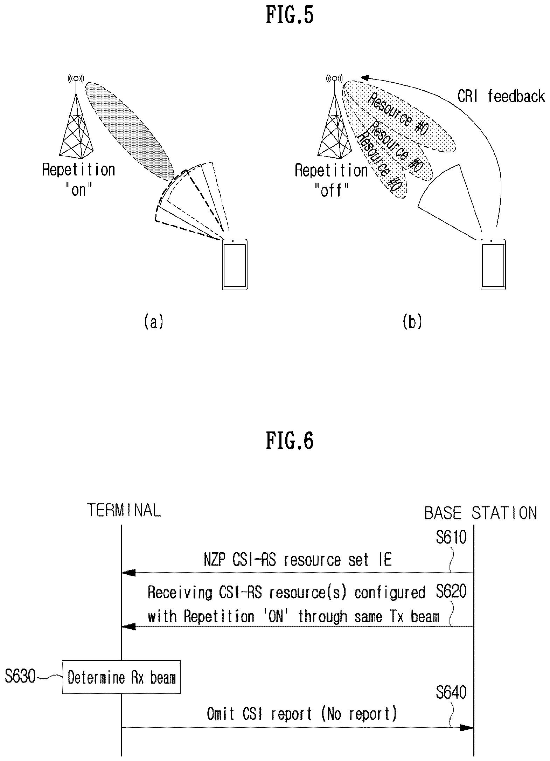

FIG. 5 is a diagram which illustrates a downlink beam management operation using CSI-RS in a wireless communication system to which the present disclosure may be applied.

FIG. 5(a) represents a Rx beam determination (or refinement) procedure of a terminal and FIG. 5(b) represents a Tx beam sweeping procedure of a base station. In addition, FIG. 5(a) is a case when a repetition parameter is configured as 'ON' and FIG. 5(b) is a case when a repetition parameter is configured as 'OFF'.

FIG. 6 is a diagram which illustrates an Rx beam determination process of a terminal in a wireless communication system to which the present disclosure may be applied.

In reference to FIG. 5(a) and FIG. 6, an Rx beam determination process of a terminal is described.

A terminal receives NZP CSI-RS resource set IE including a higher layer parameter repetition through RRC signaling from a base station (S610). Here, the repetition parameter is configured as 'ON'.

A terminal repetitively receives resources in a CSI-RS resource set configured as repetition 'ON' through the same Tx beam (or DL spatial domain transmission filter) of a base station in a different OFDM symbol (S620).

A terminal determines its Rx beam (S630).

A terminal omits a CSI report (S640). In this case, reportQuantity of a CSI report configuration may be configured as 'No report (or None)'.

In other words, the terminal may omit a CSI report when it is configured as repetition 'ON'.

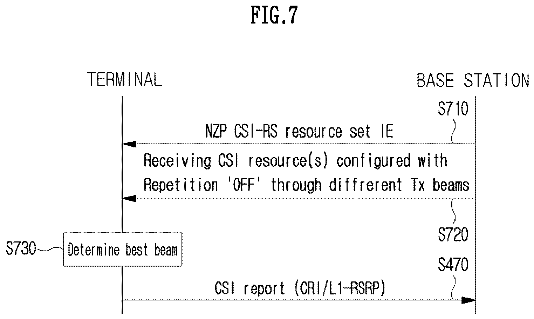

FIG. 7 is a diagram which illustrates a Tx beam determination process of a base station in a wireless communication system to which the present disclosure may be applied.

In reference to FIG. 5(b) and FIG. 7, a Tx beam determination process of a base station is described.

A terminal receives NZP CSI-RS resource set IE including a higher layer parameter repetition through RRC signaling from a base station (S710). Here, the repetition parameter is configured as 'OFF' and it is related to a Tx beam sweeping procedure of a base station.

A terminal receives resources in a CSI-RS resource set configured as repetition 'OFF' through a different Tx beam (or DL spatial domain transmission filter) of a base station (S720).

A terminal selects (or determines) the best beam (S740).

A terminal reports an ID and related quality information (e.g., L1-RSRP) of a selected beam to a base station (S740). In this case, reportQuantity of a CSI report configuration may be configured as 'CRI + L1-RSRP'.

In other words, when a CSI-RS is transmitted for BM, the terminal reports a CRI and a related L1-RSRP.

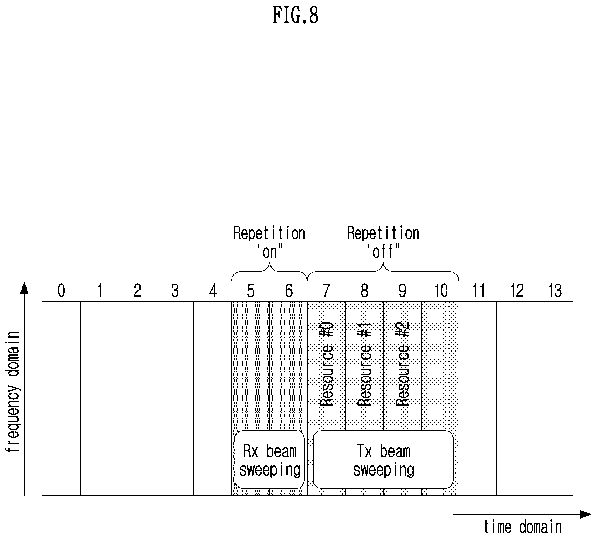

FIG. 8 is a diagram which illustrates resource allocation in a time and frequency domain related to a downlink beam management operation in a wireless communication system to which the present disclosure may be applied.

In reference to FIG. 8, it is shown that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted in a different Tx beam.

Hereinafter, a beam indication method related to downlink BM will be described.

A terminal may be configured by RRC with a list of a maximum M candidate transmission configuration indication (TCI) states at least for a purpose of a QCL(Quasi Co-location) indication. Here, M may be 64.

Each TCI state may be configured as one RS set. Each ID of a DL RS at least for a spatial QCL purpose (QCL Type D) in a RS set may refer to one of DL RS types such as an SSB, a P(periodic)-CSI RS, an SP(semi-persistent)-CSI RS, an A(aperiodic)-CSI RS, etc.

An ID of DL RS(s) in a RS set used at least for a purpose of a spatial QCL may be initialized/updated at least by explicit signaling.

Table 3 illustrates a TCI-State information element (IE).

A TCI-State IE is associated with a quasi co-location (QCL) type corresponding to one or two DL reference signals (RS).

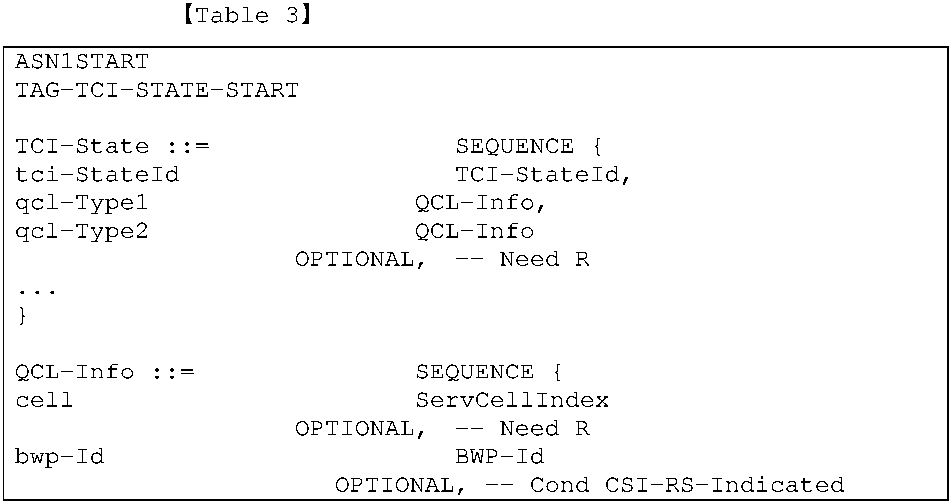

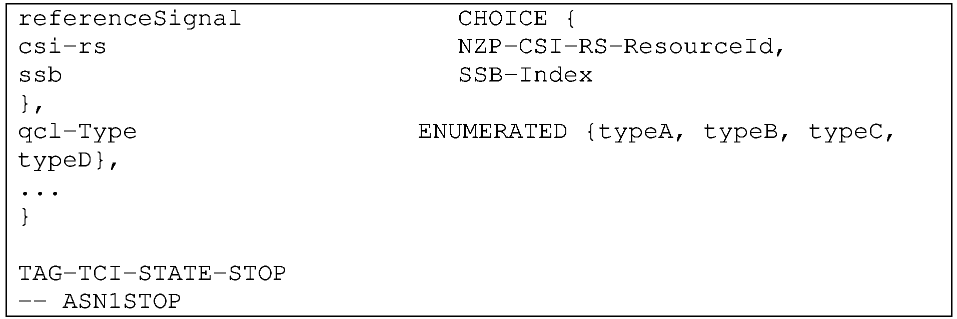

In Table 3, a bwp-Id parameter represents a DL BWP(bandwidth part) where an RS is located, a cell parameter represents a carrier where a RS is located and a referencesignal parameter represents reference antenna port(s) which is a source of a quasi co-location for corresponding target antenna port(s) or a reference signal including it. The target antenna port(s) may be a CSI-RS, a PDCCH DMRS, or a PDSCH DMRS. In an example, a corresponding TCI state ID(identifier) may be indicated in NZP CSI-RS resource configuration information to indicate QCL reference RS information for a NZP(non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s).

Hereinafter, uplink beam management is described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS (Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

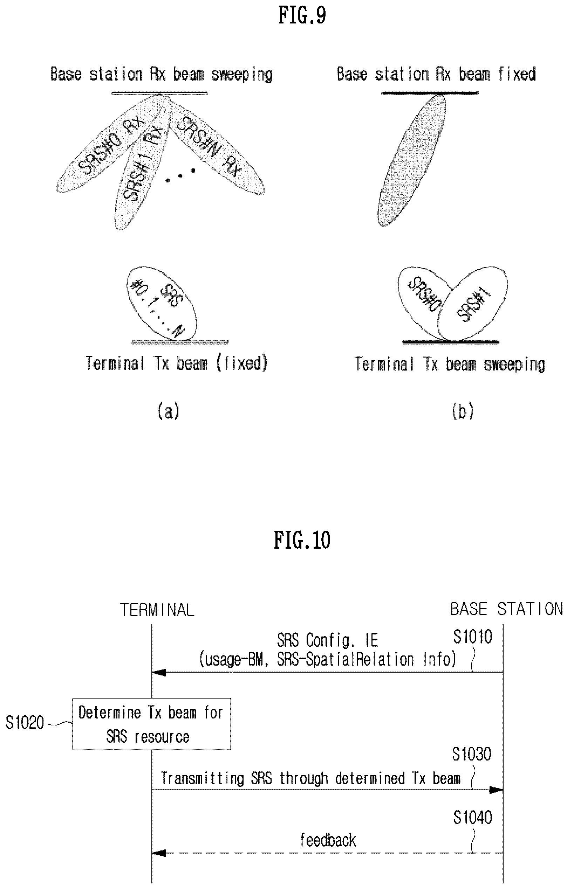

FIG. 9 is a diagram which illustrates an uplink beam management operation using SRS in a wireless communication system to which the present disclosure may be applied.

FIG. 9(a) illustrates a Rx beam determination operation of a base station and FIG. 9(b) illustrates a Tx beam sweeping operation of a terminal.

FIG. 10 is a diagram which illustrates an uplink beam management procedure in a wireless communication system to which the present disclosure may be applied.

A terminal receives RRC signaling (e.g., an SRS-Config IE) including a (higher layer parameter) usage parameter configured as 'beam management' from a base station (S1010).

Table 4 represents an example of an SRS-Config IE(Information Element) and an SRS-Config IE is used for SRS transmission configuration. An SRS-Config IE includes a list of SRS-Resources and a list of SRS-ResourceSets. Each SRS resource set means a set of SRS-resources.

A network may trigger transmission of an SRS resource set by using configured aperiodicSRS-ResourceTrigger (L1 DCI).

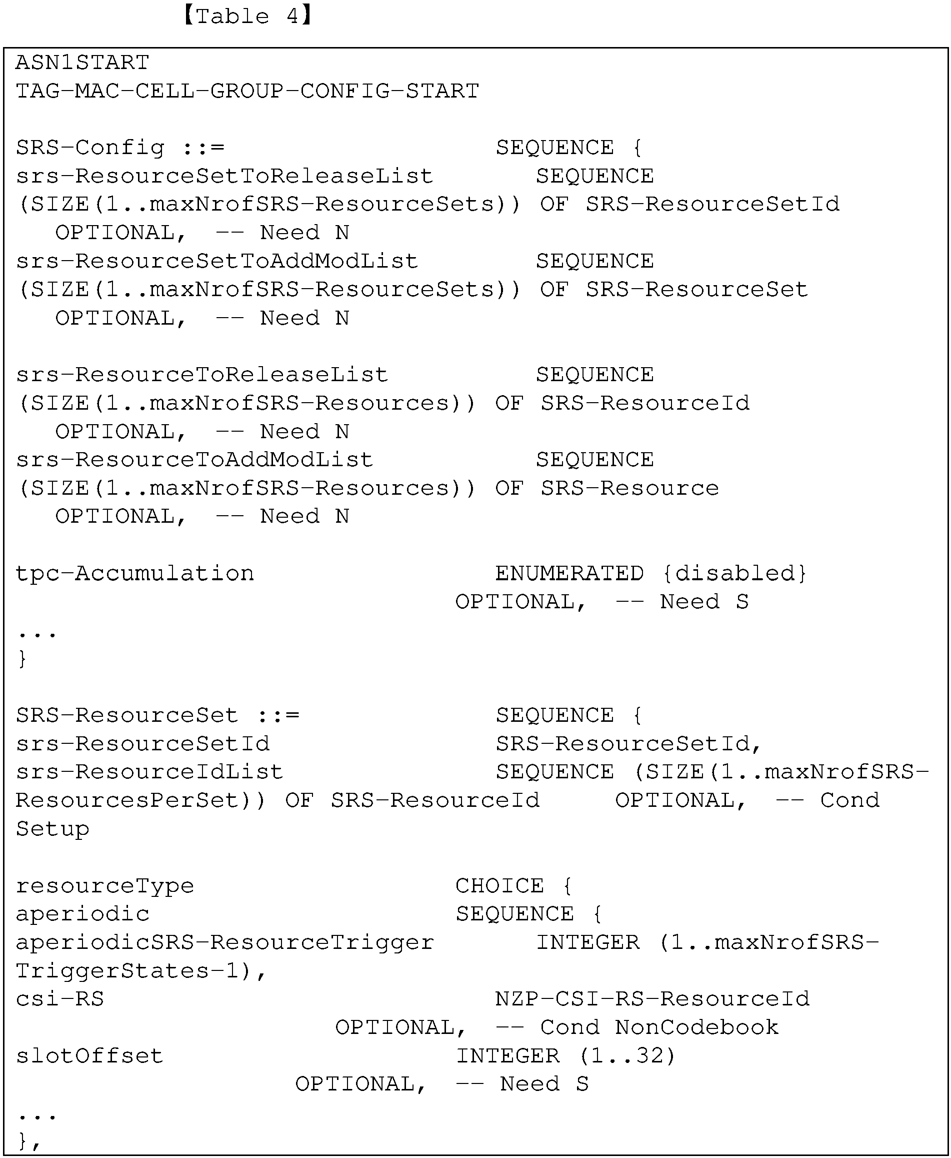

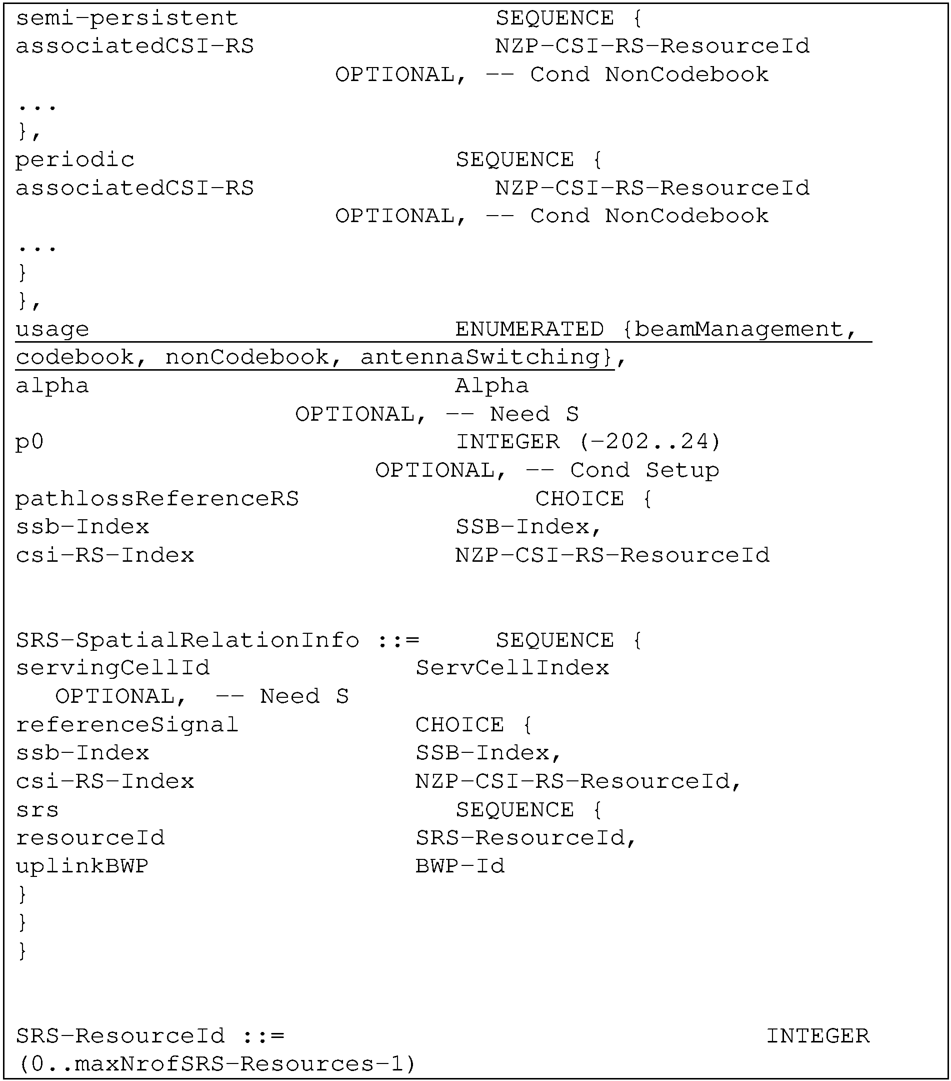

In Table 4, usage represents a higher layer parameter which indicates whether an SRS resource set is used for beam management or is used for codebook-based or non-codebook-based transmission. A usage parameter corresponds to a L1 parameter 'SRS-SetUse'. 'spatialRelationInfo' is a parameter which represents a configuration of a spatial relation between a reference RS and a target SRS. Here, a reference RS may be a SSB, a CSI-RS or a SRS corresponding to a L1 parameter 'SRS-SpatialRelationInfo'. The usage is configured per SRS resource set.

A terminal determines a Tx beam for an SRS resource which will be transmitted based on SRS-SpatialRelation Info included in the SRS-Config IE (S1020). Here, SRS-SpatialRelation Info is configured per SRS resource and represents whether the same beam as a beam used in a SSB, a CSI-RS or a SRS will be applied per SRS resource. In addition, SRS-SpatialRelationInfo may be configured or may not be configured for each SRS resource.

If SRS-SpatialRelationInfo is configured for an SRS resource, the same beam as a beam used in a SSB, a CSI-RS or a SRS is applied and transmitted. But, if SRS-SpatialRelationInfo is not configured for an SRS resource, the terminal randomly determines a Tx beam and transmits an SRS through the determined Tx beam (S1030).

In more detail, for a P-SRS that 'SRS-ResourceConfigType' is configured as 'periodic':
i) when SRS-SpatialRelationInfo is configured as 'SSB/PBCH', a UE transmits a corresponding SRS resource by applying the same spatial domain transmission filter (or generated by a corresponding filter) as a spatial domain Rx filter used for SSB/PBCH reception; or
ii) when SRS-SpatialRelationInfo is configured as 'CSI-RS', a UE transmits a SRS resource by applying the same spatial domain transmission filter used for periodic CSI-RS or SP(semi-persistent) CSI-RS reception; or
iii) when SRS-SpatialRelationInfo is configured as ' SRS', a UE transmits a corresponding SRS resource by applying the same spatial domain transmission filter used for periodic SRS transmission.

Although 'SRS-ResourceConfigType' is configured as 'SP(semi-persistent)-SRS' or 'AP(aperiodic)-SRS', a beam determination and transmission operation may be applied in a way similar to the above.

Additionally, a terminal may receive or may not receive a feedback on an SRS from a base station as in the following three cases (S1040).
i) when Spatial_Relation_Info is configured for all SRS resources in a SRS resource set, a terminal transmits an SRS with a beam indicated by a base station. For example, when Spatial_Relation_Info indicates all the same SSB, CRI or SRI, a terminal repetitively transmits an SRS with the same beam. This case corresponds to FIG. 9(a) as a usage for a base station to select an Rx beam.
ii) Spatial_Relation_Info may not be configured for all SRS resources in an SRS resource set. In this case, a terminal may transmit with freely changing SRS beams. In other words, this case corresponds to FIG. 9(b) as a usage for a terminal to sweep Tx beams.
iii) Spatial_Relation_Info may be configured only for a part of SRS resources in an SRS resource set. In this case, for a configured SRS resource, an SRS may be transmitted with an indicated beam, and for a SRS resource that Spatial_Relation_Info is not configured an SRS may be transmitted by randomly applying a Tx beam by a terminal.

### Multi Panel Operations

'A panel' referred to in the present disclosure may be interpreted/applied as 'a plurality of (or at least one) panels' or 'a panel group' (having a similarity/a common value from a viewpoint of a specific characteristic (e.g., timing advance (TA), a power control parameter, etc.)). Alternatively, 'a panel' referred to in the present disclosure may be interpreted/applied as 'a plurality of (or at least one) antenna ports' or 'a plurality of (or at least one) uplink resources' or 'an antenna port group' or 'an uplink resource group (or set)' (having a similarity/a common value from a viewpoint of a specific characteristic (e.g., TA, a power control parameter, etc.)). Alternatively, 'a panel' referred to in the present disclosure may be interpreted/applied as 'a plurality of (or at least one) beams' or 'at least one beam group (or set)' (having a similarity/a common value from a viewpoint of a specific characteristic (e.g., TA, a power control parameter, etc.)). Alternatively, 'a panel' referred to in the present disclosure may be defined as a unit for a terminal to configure a transmission/reception beam. For example, 'a transmission panel' may generate a plurality of candidate transmission beams in one panel, but it may be defined as a unit which may use only one beam of them in transmission at a specific time. In other words, only one transmission beam (spatial relation information RS) may be used per Tx panel to transmit a specific uplink signal/channel. In addition, 'a panel' in the present disclosure may refer to 'a plurality of (or at least one) antenna ports' or 'an antenna port group' or 'an uplink resource group (or set)' with common/similar uplink synchronization and may be interpreted/applied as an expression which is generalized as 'an uplink synchronization unit (USU)'. In addition, 'a panel' in the present disclosure may be interpreted/applied as an expression which is generalized as 'an uplink transmission entity (UTE)'.

In addition, the 'uplink resource (or resource group) ' may be interpreted/applied as a PUSCH/PUCCH/SRS/PRACH resource (or resource group (or set)). In addition, the interpretation/application may be interpreted/applied conversely. In addition, 'an antenna (or an antenna port)' may represent a physical or logical antenna (or antenna port) in the present disclosure.

In other words, 'a panel' referred to in the present disclosure may be variously interpreted as 'a terminal antenna element group', 'a terminal antenna port group', 'a terminal logical antenna group', etc. In addition, for which physical/logical antennas or antenna ports will be combined and mapped to one panel, a variety of schemes may be considered by considering a position/a distance/a correlation between antennas, a RF configuration, and/or an antenna (port) virtualization scheme, etc. Such a mapping process may be changed according to terminal implementation. In addition, 'a panel' referred to in the present disclosure may be interpreted/applied as 'a plurality of panels' or 'a panel group' (having a similarity from a viewpoint of a specific characteristic).

Hereinafter, multi-panel structures will be described.

Terminal modeling which installs a plurality of panels (e.g., configured with one or a plurality of antennas) in terminal implementation in a high-frequency band (e.g., bidirectional two panels in 3GPP UE antenna modeling). A variety of forms may be considered in implementing a plurality of panels of such a terminal. Contents described below are described based on a terminal which supports a plurality of panels, but they may be extended and applied to a base station (e.g., a TRP) which supports a plurality of panels. The after-described contents related to multi-panel structures may be applied to transmission and reception of a signal and/or a channel considering multi panels described in the present disclosure.

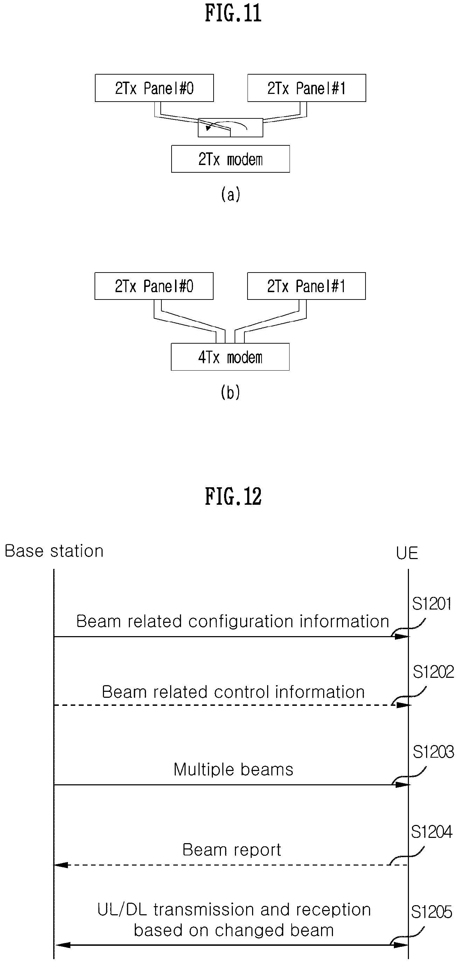

FIG. 11 is a diagram illustrating multi panel terminals in a wireless communication system to which the present disclosure may be applied.

FIG. 11(a) illustrates implementation of RF (radio frequency) switch-based multi panel terminals and FIG. 11(b) illustrates implementation of RF connection-based multi panel terminals.

For example, it may be implemented based on a RF switch as in FIG. 11(a). In this case, only one panel is activated for a moment and it may be impossible to transmit a signal for a certain duration of time to change an activated panel (i.e., panel switching).

For implementation of a plurality of panels in a different way, a RF chain may be connected respectively so that each panel can be activated anytime as in FIG. 11(b). In this case, time for panel switching may be 0 or too little. And, it may be possible to simultaneously transmit a signal by activating a plurality of panels at the same time (STxMP: simultaneous transmission across multi-panel) according to a model and power amplifier configuration.

For a terminal having a plurality of panels, a radio channel state may be different per panel, and in addition, a RF/antenna configuration may be different per panel, so a method in which a channel is estimated per panel is needed. In particular, a process in which one or a plurality of SRS resources are transmitted respectively per panel is needed to measure uplink quality or manage an uplink beam, or to measure downlink quality per panel or manage a downlink beam by utilizing channel reciprocity. Here, a plurality of SRS resources may be SRS resources which are transmitted by a different beam in one panel or may be SRS resources which are repeatedly transmitted by the same beam. Hereinafter, for convenience, a set of SRS resources transmitted in the same panel (a specific usage parameter (e.g., beam management, antenna switching, a codebook-based PUSCH, a non-codebook based PUSCH) and a specific time domain behavior (e.g., aperiodic, semi-persistent, or periodic)) may be referred to as an SRS resource group. For this SRS resource group, an SRS resource set configuration supported in a Rel-15 NR system may be utilized as it is or it may be configured separately by bundling one or a plurality of SRS resources (having the same time domain behavior and usage).

For reference, only when usage is beam management for the same usage and time domain behavior in Rel-15, a plurality of SRS resource sets may be configured. In addition, it is defined so that simultaneous transmission cannot be performed between SRS resources configured in the same SRS resource set, but simultaneous transmission can be performed between SRS resources belonging to a different SRS resource set. Accordingly, if panel implementation and simultaneous transmission of a plurality of panels as in FIG. 11(b) are considered, a corresponding concept (an SRS resource set) itself may be matched to an SRS resource group. But, an SRS resource group may be separately defined if even implementation (panel switching) as in FIG. 11(a) is considered. In an example, a configuration may be given by giving a specific ID to each SRS resource so that resources with the same ID belong to the same SRS resource group and resources with a different ID belong to a different resource group.

For example, it is assumed that 4 SRS resource sets configured for BM usage (RRC parameter usage is configured as 'BeamManagement') are configured to a UE. Hereinafter, for convenience, each is referred to as SRS resource set A, B, C, D. In addition, a situation is considered which applies implementation performing SRS transmission by corresponding each of the sets to one (Tx) panel because UE implements a total of 4 (Tx) Panels.

**[Table 5]**

| The maximum number of SRS resource sets across all time domain behaviors (periodic/semi-persistent/aperiodic) reported in 2-30 | Additional limit to the maximum number of the maximum SRS resource sets per supported time domain behavior (periodic/semi-persistent/aperiodic) |
|---|---|
| 1 | 1 |
| 2 | 1 |
| 3 | 1 |
| 4 | 2 |
| 5 | 2 |
| 6 | 2 |
| 7 | 4 |
| 8 | 4 |

In Rel-15 standards, such UE implementation is more clearly supported by the following agreement. In other words, for a UE which performs capability reporting for a value reported in feature group (FG) 2-30 as 7 or 8 in Table 5, a total of up to 4 SRS resource sets for BM (per supported time domain behavior) may be configured as in the right column of Table 5. As above, implementation which performs transmission by corresponding one UE panel to each set may be applied.

Here, when 4 panel UE corresponds each panel to one SRS resource set for BM and transmits it, the number itself of configurable SRS resources per each set is also supported by separate UE capability signaling. For example, it is assumed that 2 SRS resources are configured in the each set. It may correspond to 'the number of UL beams' which may be transmitted per panel. In other words, the UE may respectively correspond 2 UL beams to 2 configured SRS resources per each panel and transmit them when 4 panels are implemented. In this situation, according to Rel-15 standards, one of a codebook(CB)-based UL or non-codebook(NCB)-based UL mode may be configured for final UL PUSCH transmission scheduling. In any case, only one SRS resource set (having usage set as "CB-based UL" or "NCB-based UL") configuration, i.e., only one dedicated SRS resource set (for a PUSCH) configuration, is supported in Rel-15 standards.

Hereinafter, multi panel UE (MPUE) categories will be described.

Regarding the above-described multi panel operations, the following 3 MPUE categories may be considered. Specifically, 3 MPUE categories may be classified according to i) whether multiple panels may be activated and/or ii) transmission using multiple panels may be possible.

i) MPUE category 1: In a terminal that multiple panels are implemented, only one panel may be activated at a time. A delay for panel switching/activation may be configured as [X]ms. In an example, the delay may be configured to be longer than a delay for beam switching/activation and may be configured in a unit of a symbol or in a unit of a slot. MPUE category 1 may correspond to MPUE-assumption1 described in standardization-related documents (e.g., a 3gpp agreement, a technical report(TR) document and/or a technical specification(TS) document, etc.).

ii) MPUE category 2: In a terminal that multiple panels are implemented, multiple panels may be activated at a time. One or more panels may be used for transmission. In other words, simultaneous transmission using panels may be performed in a corresponding category. MPUE category 2 may correspond to MPUE-assumption2 described in standardization-related documents (e.g., a 3gpp agreement, a TR document and/or a TS document, etc.).

iii) MPUE category 3: In a terminal that multiple panels are implemented, multiple panels may be activated at a time, but only one panel may be used for transmission. MPUE category 3 may correspond to MPUE-assumption3 described in standardization-related documents (e.g., a 3gpp agreement, a TR document and/or a TS document, etc.).

Regarding multi panel-based signal and/or channel transmission and reception suggested in the present disclosure, at least one of the above-described 3 MPUE categories may be supported. In an example, in Rel-16, MPUE category 3 of the following 3 MPUE categories may be (selectively) supported.

In addition, information on a MPUE category may be predefined in specifications (i.e., standards). Alternatively, information on a MPUE category may be configured semi-statically and/or may be indicated dynamically according to a system situation (i.e., a network aspect, a terminal aspect). In this case, a configuration/an indication, etc. related to multi panel-based signal and/or channel transmission and reception may be configured/indicated by considering a MPUE category.

Hereinafter, a configuration/an indication related to panel-specific transmission/reception will be described.

Regarding a multi panel-based operation, signal and/or channel transmission and reception may be performed in a panel-specific way. Here, being panel-specific may mean that signal and/or channel transmission and reception in a unit of a panel may be performed. Panel-specific transmission and reception may be referred to as panel-selective transmission and reception.

Regarding panel-specific transmission and reception in a multi panel-based operation suggested in the present disclosure, a method of using identification information (e.g., an identifier(ID), an indicator, etc.) for configuring and/or indicating a panel which will be used for transmission and reception among one or more panels may be considered.

In an example, an ID for a panel may be used for panel-selective transmission of a PUSCH, a PUCCH, an SRS, and/or a PRACH among activated multiple panels. The ID may be configured/defined based on at least any one of the following 4 methods (options (Alts) 1, 2, 3, 4).
i) Alt.1 : An ID for a panel may be an SRS resource set ID.
   In an example, it may be desirable to correspond each UE Tx panel to an SRS resource set configured in terms of terminal implementation when considering a) an aspect that SRS resources of multiple SRS resource sets having the same time domain behavior are simultaneously transmitted in the same BWP, b) an aspect that a power control parameter is configured in a unit of an SRS resource set, c) an aspect that a terminal may report up to 4 SRS resource sets (they may correspond to up to 4 panels) according to a supported time domain behavior. In addition, an Alt.1 scheme has an advantage that an SRS resource set related to each panel may be used for 'codebook' and 'non-codebook'-based PUSCH transmission. In addition, for an Alt.1 scheme, multiple SRS resources belonging to multiple SRS resource sets may be selected by extending an SRI (SRS resource indicator) field of DCI. In addition, a mapping table of an SRI to SRS resource may need to be extended to include SRS resources in the whole SRS resource set.
ii) Alt.2 : An ID for a panel may be an ID which is (directly) associated with a reference RS resource and/or a reference RS resource set.
ii) Alt.3 : An ID for a panel may be an ID which is directly associated with a target RS resource (a reference RS resource) and/or a reference RS resource set.
   An Alt.3 scheme has an advantage that configured SRS resource set(s) corresponding to one UE Tx panel may be controlled more easily and that the same panel identifier may be allocated to multiple SRS resource sets having a different time domain behavior.
iv) Alt.4 : An ID for a panel may be an ID which is additionally configured to spatial relation information (e.g., RRC_ SpatialRelationInfo).

An Alt.4 scheme may be a scheme which newly adds information for representing an ID for a panel. In this case, it has an advantage that configured SRS resource sets corresponding to one UE Tx panel may be controlled more easily and that the same panel identifier may be allocated to multiple SRS resource sets having a different time domain behavior.

In an example, a method of introducing an UL TCI similarly to the existing DL TCI (Transmission Configuration Indication) may be considered. Specifically, definition of a UL TCI state may include a list of reference RS resources (e.g., an SRS, a CSI-RS and/or an SSB). A current SRI field may be reused to select a UL TCI state from a configured set or a new DCI field of DCI format 0_1 (e.g., a UL-TCI field) may be defined for a corresponding purpose.

Information related to the above-described panel-specific transmission and reception (e.g., a panel ID, etc.) may be transmitted by higher layer signaling (e.g., a RRC message, MAC-CE, etc.) and/or lower layer signaling (e.g., layer1 (L1: Layer1) signaling, DCI, etc.). Corresponding information may be transmitted from a base station to a terminal or may be transmitted from a terminal to a base station according to a situation or if necessary.

In addition, corresponding information may be configured by a hierarchical method which configures a set for a candidate group and indicates specific information.

In addition, the above-described identification information related to a panel may be configured in a unit of a single panel or in a unit of multiple panels (e.g., a panel group, a panel set).

### Beam management Method for network energy saving

In the present disclosure, '/' means 'and', 'or', or 'and/or' depending on the context.

In the present disclosure, the QCL type-D reference signal (RS) or TCI state (or simply TCI) may mean a spatial parameter, i.e., a QCL reference RS for a DL beam, or may be extended and interpreted as a reference RS or source RS for the spatial parameter or other beam/space-related parameters. In addition, in the proposed method of the present disclosure, the indication of the QCL type-D RS may be omitted in an environment where analog beamforming is not used, such as a low-frequency band. In this case, the QCL type-D RS in the present disclosure may be interpreted as a QCL reference RS (i.e., if there is only one reference RS in the TCI state, it may refer to the corresponding RS). In addition, from a UL perspective, the TCI state (or TCI for short) may refer to a reference/source RS for a UL beam, or may indicate a spatial relation RS (and pathloss RS) in the existing Rel-15/16. Here, the pathloss RS may be the same as the spatial relation RS, or may be configured in association with the UL TCI state, or may be configured separately.

The beam management method described above can be broadly classified as follows.

Operation 1: Base station's Tx (and Rx) beam selection method 1 (UE measurement-based)
- (Beam measurement/reporting of UE) A base station receives from a UE a beam RS identifier (ID) (i.e., CRI or SSBRI) (s) preferred by the UE and the associated beam quality value (e.g., L1-RSRP or L1-SINR) (s).
- (Beam indication of base station) Based on the above report information, the base station selects a Tx beam (and also selects an Rx beam corresponding to the Tx beam) and indicates the related DL beam (i.e., QCL type-D RS) to the UE (and also indicates the UL beam (i.e., spatial relation RS) to the UE).

Operation 2: Base station's Rx (and Tx) beam selection method 2 (Base station measurement based)
- (Beam measurement of base station) Measure beam quality (by changing the base station's Rx beam) based on BM (beam management) SRS transmission based on multiple resources of a UE (e.g. same spatial relation configured for a BM SRS set) .
- (Beam indication of base station) Based on the above measurement values, the base station selects an Rx beam (and also selects a Tx beam corresponding to the Rx beam) and indicates the related UL beam (i.e., spatial relation RS) (and indicates the DL beam (i.e., QCL type-D RS)).

Operation 3: UE's Rx (and Tx) beam selection assistance method (UE measurement-based)
- (beam measurement/decision of UE) Measure beam quality (by changing UE's Rx beam) based on CSI-RS transmission (e.g. repetition = ON) (or SSB transmission) based on multiple resources of a base station, and select UE's Rx beam (and also select Tx beam corresponding to Rx beam) based on the measured value.

Meanwhile, the beam indication was performed in units of each DL/UL channel/signal in Rel-15, but in Rel-16, an integrated beam indication method for multiple component carriers and an integrated beam indication method for multiple PUCCH resources were introduced. In addition, an integrated beam indication method for multiple DL/UL channels/signals was also introduced in Rel-17. According to the Rel-17 method, the TCI state can be applied not only to DL but also to UL. In addition, since the corresponding TCI state can be applied to a PDCCH, PDSCH, PUCCH, PUSCH, SRS, and CSI-RS, the beam for the DL/UL channels/signals can be changed at once by changing/indicating the corresponding TCI state.

The beam indication method is broadly divided into the following two types.

### Scheme 1) MAC-CE based scheme

When N TCI states are configured by RRC signaling and only one TCI state among the N TCI states is activated through the MAC-control element (CE), a UE applies the corresponding TCI state to the channels/signals (i.e., applies the beam activated by MAC-CE).

For example, the MAC CE for TCI state indication of DL RS/channel may include a semi-persistent (SP) CSI-RS/CSI-IM Resource Set Activation/Deactivation MAC CE, a TCI States Activation/Deactivation for UE-specific PDSCH MAC CE, a TCI State Indication for UE-specific PDCCH MAC CE, etc. In addition, the MAC CE for spatial relation or TCI state indication of UL RS/channel may include an SP SRS Activation/Deactivation MAC CE, an Enhanced SP/AP SRS Spatial Relation Indication MAC CE, an SP/AP SRS TCI State Indication MAC CE, a PUCCH spatial relation Activation/Deactivation MAC CE, an Enhanced PUCCH Spatial Relation Activation/Deactivation MAC CE, etc. In addition, the MAC CE for unified TCI state indication for DL RS/channel and UL RS/channel may include a Unified TCI States Activation/Deactivation MAC CE, etc.

### Scheme 2) DCI-based method

N TCI states are configured by RRC signaling, and M (M>1) TCI states are activated among them through MAC-CE (refer to MAC CE exemplified in the MAC-CE-based method above). Then, one TCI state is designated among the M activated TCI states by DCI (using a TCI field in the predefined DCI). A UE applies the corresponding TCI state to the channels/signals (i.e., applies the beam finally indicated by the DCI).

As described in the above operations 1 and 2, a base station selects a Tx/Rx beam of the base station based on a measurement/report of a UE or a measurement value of the base station and performs the DL/UL beam indication based on this. Here, it is the UE's operation (i.e., implementation issue) to select and apply a UE's Rx/Tx beam suitable for the corresponding Tx/Rx beam. Although the above operation 3 is supported to help the UE select the beam, this is only that the base station repeatedly transmits RSs with multiple identical Tx beams applied to help the UE select the beam, and how the UE selects the beam based on the RSs is also spec transparent to the standard (i.e., UE implementation issue). Based on this, a typical UE implementation method would be as follows.
- General UE implementation method: A UE selects/applies a UE Rx/Tx beam that can receive a serving beam RS (i.e., TCI/QCL type-D RS/spatial relation RS applied/indicated to PDCCH/PDSCH/PUCCH/PUSCH, etc.) indicated by a base station with the best possible quality, and (slightly) adjusts the UE beam according to repetitive transmission (e.g., periodic transmission, repetition=ON, etc.) of the corresponding serving beam RS.

Meanwhile, energy saving of base stations is considered important in wireless communication systems including 3GPP because it can contribute to building eco-friendly networks by reducing carbon emissions and reducing operational expenditures (OPEX) of communication industry players. In particular, as the introduction of 5G communications requires higher transmission rates, base stations must be equipped with more antennas and provide services through wider bandwidths and frequency bands. As a result, the energy cost of base stations has reached 20% of the total OPEX according to a recent study. Due to this increased interest in base station energy saving, a new study item called "study on network energy savings" was approved in 3GPP NR release 18.

Specifically, the following enhancement techniques are considered in order to enhance the energy saving capability of a base station in terms of transmission and reception:

" A method for achieving more efficient operation of transmission and/or reception and dynamically and/or semi-statically finer granularity adaptation in one or more network energy saving techniques in time, frequency, space and power domains through potential assistance/feedback from a UE and potential UE assistance information"

In this way, methods for saving energy at a base station will be discussed in 3GPP Rel-18. One method for saving energy at a base station can be to turn off some antennas or panels of the base station (for a certain period of time) (depending on traffic conditions, etc.). Considering these actions, some beam(s) of the base station may be deactivated in accordance with the antenna/panel turn-off. Here, it is expected that the base station will indicate the UE, which is indicating/using the beam to be deactivated (i.e., turned off) as its serving beam, to change to a new serving beam. However, there is a problem that the new serving beam is likely to have a large difference in beam direction compared to the existing serving beam, and thus, if the UE uses the Tx/Rx beam aligned with the existing serving beam to transmit/receive the new serving beam, there is a high probability that the performance will be significantly degraded.

Therefore, since a serving beam may change abruptly for some UE(s) when an antenna/panel of a base station is turned off, a method is needed to help the UE(s) find a Rx/Tx beam to match the new serving beam.

To this end, the present disclosure proposes a method for saving base station energy, particularly from the perspective of beam management.

Hereinafter, in the description of the present disclosure, a beam (or beam RS or RS) may mean a beamformed RS (e.g., SSB, CSI-RS, SRS, etc.). In addition, a beam (or beam RS or RS) may have different directionality depending on the resource to which it is transmitted, and different resource(s) to which the beamformed RS is transmitted may mean different beams (or beam RS or RS). Here, the resource(s) to which the beam (or beam RS or RS) is transmitted may be distinguished by an identifier (ID). In addition, in the present disclosure, a beam (or beam RS or RS) may be used to mean both a DL beam and a UL beam unless otherwise distinguished.

In addition, a serving beam (or serving beam RS) may refer to a QCL type-D RS (or TCI state) or spatial relation RS indicated (e.g., activated by MAC-CE or indicated by DCI) by the beam indication method (i.e., the MAC-CE-based scheme or the DCI-based scheme described above) for a specific downlink channel (e.g., PDCCH, PDSCH, etc.) and/or uplink channel (e.g., PUCCH, PUSCH, etc.). As described above, since a beam (or beam RS or RS) can be distinguished according to the resource(s) to be transmitted, a beam (or beam RS or RS) may be indicated as the resource(s) are identified/indicated by the beam indication method (i.e., the MAC-CE-based scheme or the DCI-based scheme described above).

Proposal method 1: In a beam RS related configuration/indication of a UE, a base station may include 'to-be-turned-off' and/or 'to-be-turned-on' related indication information (or information) (e.g., an indicator).

The 'to-be-turned-off' related (indication) information may be (indication) information indicating that the corresponding RS or RSs will be excluded from the serving beam (or candidates for the serving beam) (after a predetermined time or a time configured by a base station). In particular, the corresponding RS or RSs may be included in the serving beam RS (e.g., activated/indicated TCI state(s) (or QCL type-D RS(s)) for PDCCH/PDSCH/PUCCH/PUSCH) at the current time (e.g., the time at which the 'to-be-turned-off' related (indication) information is indicated). For example, when 'to-be-turned-off' is configured, a UE may expect that the activated/indicated TCI state(s) will be changed to other CSI-RS/SSB resource(s) other than the corresponding CSI-RS/SSB resource(s).

In addition, the 'to-be-turned-on' related (indication) information may be (indication) information indicating that the corresponding RS or RSs will be included in the serving beam (or candidates for the serving beam) (after a predetermined time or a time configured by a base station). In particular, the corresponding RS or RSs may not be included in the serving beam RS (e.g., activated/indicated TCI state(s) (or QCL type-D RS(s)) for PDCCH/PDSCH/PUCCH/PUSCH) at the current time (e.g., the time at which the 'to-be-turned-on' related (indication) information is indicated). For example, when 'to-be-turned-on' is configured, a UE may expect that the activated/indicated TCI state(s) will be changed to the corresponding CSI-RS/SSB resource(s) (CSI-RS/SSB resource(s) indicated as 'to-be-turned-on').

In this way, by informing a UE which RS(s) will be included or excluded in the future serving beam, the UE can find a Rx/Tx beam for the changed serving beam in advance based on the information. For example, a UE can find a Rx beam (and corresponding Tx beam) with excellent beam quality for the RS(s) set to 'to-be-turned-on' in advance before the serving beam is changed to the corresponding beam. More specifically, when measuring/reporting the L1-RSRP/SINR value, a UE can measure/report a value based on Rx beam(s) optimized for the corresponding RS(s) for which the (indication) information is configured.

As another example, for RS(s) set to 'to-be-turned-off', a UE may exclude (or lower the priority of) the RS(s) when searching for the UE's Rx/Tx beam. More specifically, when measuring/reporting L1-RSRP/SINR values, the UE may measure/report values based on Rx beam(s) optimized for other RS(s) than the RS(s) for which the (indication) information is coonfigured.

Embodiment 1) (L1-RSRP/SINR related) The 'to-be-turned-off' and/or 'to-be-turned-on' related (indication) information may be included in a resource related configuration/activation/indication for reporting (e.g., per resource, per resource set, per resource setting). For example, the 'to-be-turned-off' and/or 'to-be-turned-on' related (indication) information may be included in the configuration of resources for channel measurement (e.g., CSI-ResourceConfig) associated with the configuration for CSI reporting (e.g., CSI-ReportConfig) .

Here, different (indication) information may be configured/indicated for each resource or each resource set (or resource group). In addition, some resource(s) or resource set(s) within the resource-related configuration/activation/indication may not have the corresponding (indication) information configured/indicated.

For example, the (indication) information may be included as an RRC parameter for the corresponding resource related configuration. Alternatively, it may be included in a MAC CE (e.g., semi-persistent resource activation MAC-CE) and/or DCI (e.g., aperiodic resource/report triggering DCI) to support more dynamic turn on/off.

For example, when the above (indication) information(s) are configured as a resource set unit and a report for a resource set configured with 'to-be-turned-on' is triggered (e.g., by DCI triggering an aperiodic L1-RSRP/SINR report), a UE can measure and report L1-RSRP/SINR based on an Rx beam optimized for beam RSs belonging to the resource set other than the current serving beam.

As another example, if the above (indication) information(s) are configured as a resource unit and a report for some RS resource(s) configured/indicated with 'to-be-turned-off' is triggered (e.g., by DCI triggering aperiodic L1-RSRP/SINR report), a UE may find (derive) a beam RS ID (e.g., CRI/SSBRI) by more optimizing for RS(s) for which the above (indication) information is not configured (or, based on the RS(s)), and measure/report the related L1-RSRP/SINR. Conversely, when a report for some RS resource(s) configured/indicated with 'to-be-turned-on' is triggered (e.g., by DCI triggering aperiodic L1-RSRP/SINR report), a UE can find (derive) beam RS ID (e.g., CRI/SSBRI) by more optimizing for (or based on) the RS(s) for which the (indication) information is configured, and measure/report the related L1-RSRP/SINR. Alternatively, if both of the above two (indication) pieces of information (i.e., 'to-be-turned-off' and 'to-be-turned-on') are included, a UE can find (derive) the RS(s) configured with 'to-be-turned-on' as the highest priority, and find (derive) the RS(s) configured with 'to-be-turned-off' as the lowest priority, and find (derive) the RS(s) with neither of the two (indication) pieces of information as the middle priority.

For example, for a resource set with repetition=ON, the 'to-be-turned-on' indicator is configured/indicated, and a base station can notify a UE in advance that the RS repeatedly transmitted through the resource set will become a new serving beam. The UE that receives this configuration/indication can find the optimal Rx/Tx beam in advance according to the new serving beam.

For example, (for L1-SINR report) the (indication) information may be applied only to CMR among channel measurement resources (CMR) and interference measurement resources (IMR). This is because the serving beam is related to CMR rather than IMR. Alternatively, it may be applied to IMR as well as CMR. For example, for an IMR configured with 'to-be-turned-off', a UE may assume that there will be no interference from the corresponding beam RS and determine the beam and calculate the L1-SINR. For example, in an environment where multiple serving beams exist, such as a multi-TRP environment, for an IMR configured with 'to-be-turned-on', a UE may assume that the corresponding beam RS will be changed to one of the serving beams and determine the beam and calculate the L1-SINR.

Embodiment 2) (L1-RSRP/SINR related) Report related RRC configuration, report activation MAC-CE and/or report triggering DCI may include a 'to-be-turned-on' related indicator.

The above method is a method of setting/activating/indicating (indication) information proposed in the present disclosure on a report basis. That is, all RSs related to the corresponding report can have the same indicator ('to-be-turned-on' or the corresponding (indication) information is not applied). The corresponding (indication) information can be included in the report-related RRC configuration. Alternatively, in order to support more dynamic turn on/off operation, it can be included in a MAC CE (e.g., MAC-CE activating a semi-persistent report) or DCI (e.g., DCI triggering an aperiodic report).

For example, when a 'to-be-turned-on' report is triggered (e.g., by DCI triggering an aperiodic L1-RSRP/SINR report), a UE measures and reports L1-RSRP/SINR based on the Rx beam optimized for the beam RSs belonging to (associated with) the report, not the current serving beam. If repetition=ON is configured for the resource set for the report, a base station may notify a UE in advance that the RS repeatedly transmitted through the resource set will become a new serving beam. If repetition=OFF is configured for the resource set for the report, a base station may notify a UE in advance that one (or some) of the beam RSs will become a new serving beam.

For example, (for L1-SINR report) the (indication) information may be applied only to CMR and not to IMR. That is, a UE may assume that only CMR related to the report indicated as 'to-be-turned-on' will be to-be-turned-on.

Embodiment 3) 'to-be-turned-off' and/or 'to-be-turned-on' related (indication) information may be indicated (for example, by MAC-CE and/or DCI) for one or more RS resource(s) (for example, CSI-RS ID(s) or SSB ID/index(s) etc.) or for one or more TCI state(s) (or QCL type-D RS(s) etc.).

For example, in the case of the above Embodiment 1, since the (indication) information is included in the configuration for the resource(s) related to the report, the (indication) information may not be applied to the same resource(s) for the setting/indication (e.g., beam indication, etc.) unrelated to the report.

On the other hand, in the case of the above Embodiment 3, since the (indication) information is configured/indicated for one or more RS resource(s) or TCI state(s), the (indication) information can also be applied to operations (e.g., radio resource management (RRM), radio link monitoring (RLM), beam failure detection (BFD), etc.) that refer to the one or more RS resource(s) or TCI state(s).

In other words, the method of the above Embodiment 3 is a method that provides a UE with (indication) information about which beam RSs will be turned off ('to-be-turned-off') and/or turned on ('to-be-turned-on') separately from the L1-RSRP/SINR related configuration/indication. Based on this (indication) information, a UE can find an Rx/Tx beam for the beam RSs to be turned on in advance.

Embodiment 4) The beam RS indication related setting/activation/indicator (i.e., referring to the above-described MAC-CE-based method or DCI-based method) may include 'to-be-turned-off' and/or 'to-be-turned-on' related indicators.

The method for the above Embodiment 4 is a method including (indication) information proposed in RRC/MAC-CE/DCI related to beam RS indication. For example, the beam RS related indication may correspond to TCI state activation/indication for a PDCCH/PDSCH/PUCCH/PUSCH/CSI-RS/SRS, spatial relation RS activation/indication, etc.

For example, for a DCI-based beam indication method, multiple candidate beam RSs are activated with MAC-CE, and the activation indication (i.e., DCI) can inform a UE which beam RSs will be turned on and/or turned off. The UE can find an Rx/Tx beam in advance for the beam RS to be changed at a future point in time based on the (indication) information.

In the above Embodiments (especially, Embodiments 3 and 4), the (indication) information may be UE-specific information or UE (group) common information. In the latter case, the (indication) information may be transmitted and received via UE (group) common DCI (format), and a separate (group) common RNTI (not C-RNTI) may be used for this DCI (de)coding. When using this method, it may be distinguished whether the proposed method in the present disclosure is applied (e.g., when group common RNTI is used) or the existing method is applied (e.g., when C-RNTI is used) depending on the RNTI.

In addition, the above Embodiments are only various examples of signaling methods for the proposed method 1 and do not limit the scope of the present disclosure.

The above proposed method 1 is a method for informing a UE of the serving beam information that will be changed at a future point in time. In the method, since it may be necessary to specify/configure the point in time at which the corresponding RS(s) will be turned on/off, the following proposed method may be additionally applied.

Proposed Method 1-1: In applying the proposed method 1, information related to timing of the turn on and/or turn off may be pre-stipulated/defined (for example, within the standard) or a base station may configure/indicate a UE (together with or separately from the 'to-be-turned-off' and/or 'to-be-turned-on' (indication) information).

Here, if the timing information is configured/indicated together with the (indication) information, the timing information may be applied to the resource(s)/report/TCI state associated with the (indication) information.

However, if the timing information is configured/indicated separately from the above (indication) information, the resource(s)/report/TCI state to which the timing information is applied may also be configured/indicated to a UE. In this case, the timing information may be individually configured/indicated for each resource(s)/report/TCI state. That is, when each beam RS is turned on or off can be independently determined.

For example, the information related to timing of the turn on and/or turn off may be indicated in absolute time units (e.g., msec), or may be indicated in frame/subframe/slot/symbol units. Furthermore, the information related to timing of the turn on and/or turn off may be calculated from the time at which the information related to timing of the turn on and/or turn off is transmitted, or may be calculated from the timing at which 'to-be-turned-off' and/or 'to-be-turned-on' (indication) information is transmitted.

When the timing information is configured/specified, a method in which the 'to-be-turned-on' RS(s) are automatically activated/applied at that time (i.e., without beam indication by a base station) may be considered together, and/or a method in which the 'to-be-turned-off' RS(s) are automatically deactivated/not applied at that time (i.e., without beam indication by a base station) may be considered together.

Proposed method 1-1-1: In the application of the proposed method 1-1, the 'to-be-turned-off' RS resource(s) can be automatically (i.e., without beam indication by a base station) deactivated/de-applied at the time specified/configured for turn on and/or turn off, and the 'to-be-turned-on' RS resource(s) can be automatically (i.e., without beam indication by a base station) activated/applied.

For example, if only one RS is configured with the 'to-be-turned-on' indication, or if it is configured for multiple resources but repetition=ON, the serving beam RS (e.g., TCI state for PDCCH/PDSCH/PUCCH/PUSCH) can be automatically changed to the RS indicated by 'to-be-turned-on' at the specified/configured time without a separate beam change indication.

As another example, if multiple 'to-be-turned-on' RSs are configured, the corresponding RSs can be automatically activated as candidate beam RSs for the serving beam RS at the specified/configured time without a separate RS activation indication (e.g., TCI state activation MAC-CE). For example, codepoints of a TCI field indicated/applied by DCI after the corresponding time (i.e., the specified/configured time) can be automatically configured for the activated TCI states. Similarly, if multiple 'to-be-turned-off' RSs are configured, the corresponding RSs can be automatically deactivated at the specified/configured time without a separate RS deactivation indication (e.g., TCI state deactivation MAC-CE). In this case as well, codepoints of a TCI field indicated/applied by DCI after the corresponding time (i.e., the specified/configured time) can be automatically configured for TCI states excluding the TCI states for the deactivated RS.

Meanwhile, in the application of the proposed method 1, especially when the proposed method of the present disclosure is applied to L1-RSRP/SINR reporting as in Embodiment 1 or Embodiment 2, it may take more time than before for a UE to find a beam suitable for the corresponding RS (especially the RS indicated as 'to-be-turned-on'). To this end, a method of further relaxing the beam report timing may be considered.

Proposed Method 1-2: In the application of the proposed method 1, relaxed reporting timing may be defined or configured in relation to beam reporting.

The reporting timing may be related to the minimum required time (Z' value) from the last symbol of CSI-RS/SSB to the reporting start time in the NR standard, the minimum required time (Z value) from the last symbol of PDCCH on which reporting triggering DCI is transmitted to the reporting start time, the time resource location of the CSI reference resource for reporting, etc.

In applying the above proposed method 1-2, in addition to the existing L1-RSRP/SINR reporting related UE capability value, a separate UE capability value may be defined, and a UE may be configured to report the value to a base station.

Alternatively, in order to apply the above proposed method 1-2, it may be defined in the form of adding a specific constant value (e.g., 1 symbol) or variable value to the predefined timing (request value). Here, when adding a constant value, the corresponding value (e.g., number of symbols) may be defined differently depending on sub-carrier spacing (SCS). For example, it may be defined so that a larger value is applied as the sub-carrier spacing becomes larger.

FIG. 12 is a diagram illustrating a signaling procedure between a base station and a UE for a beam management method according to an embodiment of the present disclosure.

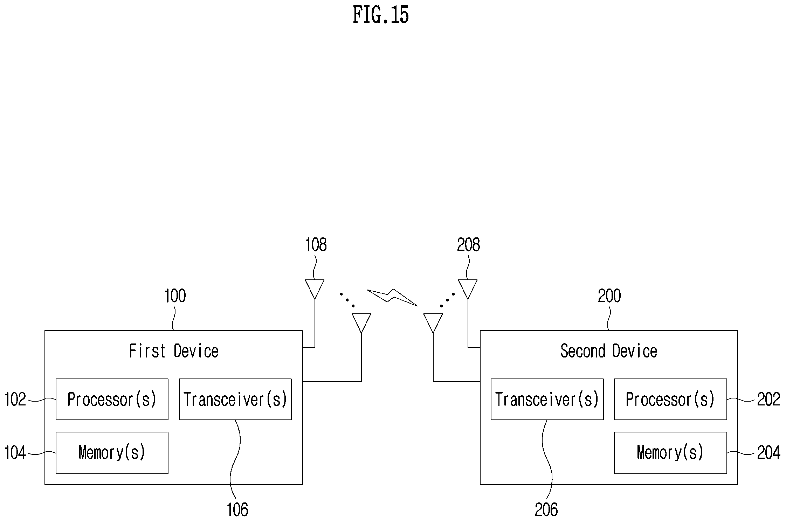

FIG. 12 illustrates a signaling procedure between a UE and a base station based on the operation and detailed embodiments (Embodiments 1 to 4, Proposed Method 1-1, Proposed Method 1-1-1, Proposed Method 1-2) of the proposed method 1 previously. The example of FIG. 12 is for convenience of explanation and does not limit the scope of the present disclosure. Some of the step(s) illustrated in FIG. 12 may be omitted depending on the situation and/or setting. In addition, a base station and a UE in FIG. 12 are only an example and may be implemented as the devices illustrated in FIG. 15 below. For example, the processor (102/202) of FIG. 15 can control the transceiver (106/206) to transmit and receive channels/signals/data/information, etc. (e.g., configuration information, control information, PDCCH, PDSCH, CSI-RS, PUSCH, PUCCH, SRS, etc.), and can also control the channel/signal/data/information, etc. to be transmitted or received, to be stored in the memory (104/204).

Although not shown in FIG. 12, a UE may transmit UE capability information related to the reporting timing to a base station. For example, according to the proposed method 1-2, in order to apply the relaxed reporting timing, a separate UE capability value may be defined in addition to the existing L1-RSRP/SINR reporting-related UE capability value, and the UE may report the value to the base station.

Referring to FIG. 12, a base station transmits beam-related configuration information to a UE (S1201).

Here, a beam (or beam RS or RS) may mean a beamformed RS (e.g., SSB, CSI-RS, SRS, etc.) as described above. In addition, the beam (or beam RS or RS) may have different directionality depending on the resource to which it is transmitted, and different resource(s) to which the beamformed RS is transmitted may mean different beams (or beam RS or RS).

In addition, the beam-related configuration information may mean configuration information for one or more parameter(s) related to a Tx/Rx beam (or beam RS or RS) of a base station and/or a Tx/Rx beam (or beam RS or RS) of a UE. For example, it may be configuration information related to beam (or CSI) reporting (e.g., configuration information related to reporting of CSI (including L1-RSRP and/or L1-SINR) (e.g., CSI-ReportConfig)), configuration information related to resources for beam (or CSI) reporting, or configuration information related to beam configuration for a specific channel/signal, BWP, serving cell, etc. (e.g., configuration information including (DL/UL or unified) TCI state(s) or spatial relation info(s))

Here, the beam related configuration information may include 'to-be-turned-on' related indication information (or information) to indicate that the RS(s) will be included in the serving beam (or candidates for the serving beam) (after a predetermined time or a time configured by a base station) and/or 'to-be-turned-off' related indication information (or information) to indicate that the RS(s) will be excluded from the serving beam (or candidates for the serving beam) (after a predetermined time or a time configured by a base station.

For example, as in the above Embodiment 1, the 'to-be-turned-off' and/or 'to-be-turned-on' related (indication) information may be included in the resource related configuration information (e.g., by RRC signaling) for the report (related to L1-RSRP/SINR). For example, it may be included in the configuration of resources for channel measurement (e.g., CSI-ResourceConfig) associated with the configuration for CSI reporting (e.g., CSI-ReportConfig).

Alternatively, as in the above Embodiment 2, 'to-be-turned-on' related (indication) information may be included in the report related configuration information (e.g., by RRC signaling) (L1-RSRP/SINR related). For example, it may be included in the configuration for CSI reporting (e.g., CSI-ReportConfig) .

Alternatively, as in the Embodiment 3 above, the 'to-be-turned-off' and/or 'to-be-turned-on' related (indication) information may be included in the configuration information (e.g., by RRC signaling) for one or more RS resource(s) (e.g., CSI-RS ID(s) or SSB ID/index(s) etc.) or for one or more TCI state(s) (or QCL type-D RS(s) etc.).

Alternatively, as in the above Embodiment 4, the 'to-be-turned-off' and/or 'to-be-turned-on' related (indication) information may be included in the configuration information related to beam configuration (e.g., configuration information including (DL/UL or unified) TCI state(s) or spatial relation info(s)).

In addition, the beam related configuration information (e.g., by RRC signaling) may further include information on the timing of 'to-be-turned-off' and/or 'to-be-turned-on'. Alternatively, the information on the timing of 'to-be-turned-off' and/or 'to-be-turned-on' may be provided to a UE by configuration information (e.g., by RRC signaling) separate from the 'to-be-turned-off' and/or 'to-be-turned-on' related (indication) information. Alternatively, the timing of 'to-be-turned-off' and/or 'to-be-turned-on' may be determined/defined in advance in relation to the time at which the information on the timing of 'to-be-turned-off' and/or 'to-be-turned-on' is transmitted.

A base station may transmit beam-related control information to a UE (S1202).

Here, the beam-related control information may mean information for activating and/or indicating a beam (or beam RS or RS) (i.e., QCL type-D RS (or TCI state) or spatial relation RS) for DL/UL channel/signal(s) (for a specific DL/UL channel/signal or integrated). Alternatively, it may mean control information for activating/triggering a beam report (e.g., L1-RSRP/SINR) to assist in selecting a Tx/Rx beam (or beam RS or RS) of a base station and/or a Tx/Rx beam (or beam RS or RS) of a UE.

Such beam-related control information may be transmitted via a MAC CE, DCI, or both a MAC CE and DCI. For example, it may be transmitted via a MAC CE and/or DCI according to the above-described beam indication method (MAC CE-based method, DCI-based method). For example, an SP CSI-RS/CSI-IM Resource Set Activation/Deactivation MAC CE, a TCI States Activation/Deactivation for UE-specific PDSCH MAC CE, a TCI State Indication for UE-specific PDCCH MAC CE, etc. can be used. Alternatively, an SP SRS Activation/Deactivation MAC CE, an Enhanced SP/AP SRS Spatial Relation Indication MAC CE, an SP/AP SRS TCI State Indication MAC CE, a PUCCH spatial relation Activation/Deactivation MAC CE, an Enhanced PUCCH Spatial Relation Activation/Deactivation MAC CE, etc. may be used. Alternatively, a Unified TCI States Activation/Deactivation MAC CE, etc. may be used.

Here, the beam related control information may include 'to-be-turned-on' related indication information (or information) to indicate that the RS(s) will be included in the serving beam (or candidates for the serving beam) (after a predetermined time or a time configured by a base station) and/or 'to-be-turned-off' related indication information (or information) to indicate that the RS(s) will be excluded from the serving beam (or candidates for the serving beam) (after a predetermined time or a time configured by a base station).

For example, as in the above Embodiment 1, the 'to-be-turned-off' and/or 'to-be-turned-on' related (indication) information may be included in the resource related activation/instruction information (e.g., by MAC CE and/or DCI) for the report (related to L1-RSRP/SINR).

Alternatively, as in the above Embodiment 2, the 'to-be-turned-off' and/or 'to-be-turned-on' related (indication) information may be included in the activation/triggering information (e.g., by MAC CE and/or DCI) related to the report (L1-RSRP/SINR related).

Alternatively, as in the above Embodiment 3, the 'to-be-turned-off' and/or 'to-be-turned-on' related (indication) information may be included in the control information (e.g., by MAC CE and/or DCI) for activation/indication for one or more RS resource(s) (e.g., CSI-RS ID(s) or SSB ID/index(s) etc.) or for one or more TCI state(s) (or QCL type-D RS(s) etc.).

Alternatively, as in the Embodiment 4 above, the 'to-be-turned-off' and/or 'to-be-turned-on' related (indication) information may be included in the activation/indication information related to beam configuration (e.g., control information activating/indicating (DL/UL or unified) TCI state(s) or spatial relation info(s) by MAC CE and/or DCI).

Additionally, the beam related control information (e.g., by MAC CE and/or DCI) may further include information on the timing of 'to-be-turned-off' and/or 'to-be-turned-on'. Alternatively, the information on the timing of 'to-be-turned-off' and/or 'to-be-turned-on' may be provided to a UE by control information (e.g., by MAC CE and/or DCI) separate from the 'to-be-turned-off' and/or 'to-be-turned-on' related (indication) information.

A base station transmits multiple beams to a UE (S1203).

As described above, the beam (or beam RS or RS) may mean a beamformed RS (e.g., SSB, CSI-RS, SRS, etc.) as described above. In addition, the beam (or beam RS or RS) may have different directionality depending on the resource to which it is transmitted, and different resource(s) to which the beamformed RS is transmitted may mean different beams (or beam RS or RS).

That is, a base station transmits the RS to a UE through different beams on multiple resources.

A UE can perform beam reporting to a base station (S1204).

Here, the beam report may correspond to a report on a measured value considering beam(s) to be changed later according to the 'to-be-turned-off' and/or 'to-be-turned-on' related (indication) information included in the beam-related configuration information of step S1201 and/or the beam-related control information of step S1202.

For example, according to the Embodiment 1, when the 'to-be-turned-off' and/or 'to-be-turned-on' related (indication) information is configured as a resource set unit for L1-RSRP/SINR reporting, if a report for a set in which 'to-be-turned-on' is configured is triggered by DCI, a UE can find a beam RS ID (e.g., CRI/SSBRI) optimized for RSs belonging to the set in which 'to-be-turned-on' is configured, and measure and report related L1-RSRP/SINR.

As another example, when the 'to-be-turned-off' and/or 'to-be-turned-on' related (indication) information is configured as a resource unit for L1-RSRP/SINR reporting, if reporting for RS(s) including some RS(s) in which the "to-be-turned-off' and/or 'to-be-turned-on' related (indication) information is configured is triggered by DCI, a UE may find a beam RS ID (e.g., CRI/SSBRI) for the RS(s) configured with the 'to-be-turned-on' related (indication) information as the highest priority and for the RS(s) configured with the 'to-be-turned-off' related (indication) information as the lowest priority, and measure and report related L1-RSRP/SINR.

In addition, based on the 'to-be-turned-on' related (indication) information and/or the 'to-be-turned-off' related (instruction) information being configured in the beam report according to the proposed method 1-2, i) the minimum required time (Z' value) from the last symbol of the resource in which the plurality of beams are transmitted to the start of the beam report and/or ii) the minimum required time (Z value) from the last symbol of the PDCCH carrying the DCI triggering the beam report to the start of the CSI report can be determined to be greater (for example, by adding a specific value) than the beam report in which the 'to-be-turned-on' related (indication) information and/or the 'to-be-turned-off' related (instruction) information is not configured. Here, the specific value can be defined/determined differently depending on SCS.

A base station and a UE perform DL/UL transmission/reception operations based on a changed beam (S1205).

Here, the changed beam means a beam according to a result of applying the 'to-be-turned-off' and/or 'to-be-turned-on' related (indication) information included in the beam-related configuration information of step S1201 and/or the beam-related control information of step S1202. That is, beam(s) turned on according to the 'to-be-turned-on' related (indication) information may be further included in the beam(s) before the 'to-be-turned-off' and/or 'to-be-turned-on' related (indication) information is applied, and also some beam(s) may be excluded according to the 'to-be-turned-off' related (indication) information.

Here, according to the proposed method 1-1-1, from the time when the beam(s) indicated by the 'to-be-turned-on' related (indication) information is automatically activated/applied (e.g., a predefined/predefined time or a time configured by a base station), the beam(s) may be automatically applied as the serving beam (TCI state for PDCCH/PDSCH/PUCCH/PUSCH, spatial relation RS). And/or, from the time when the beam(s) indicated by the 'to-be-turned-off' related (indication) information is automatically deactivated/de-applied (e.g., a predefined/predefined time or a time configured by a base station), the beam(s) may be automatically excluded from the serving beam (TCI state for PDCCH/PDSCH/PUCCH/PUSCH, spatial relation RS).

Based on the serving beam changed in the above manner, UL/DL transmission/reception operations between a base station and a UE may be performed.

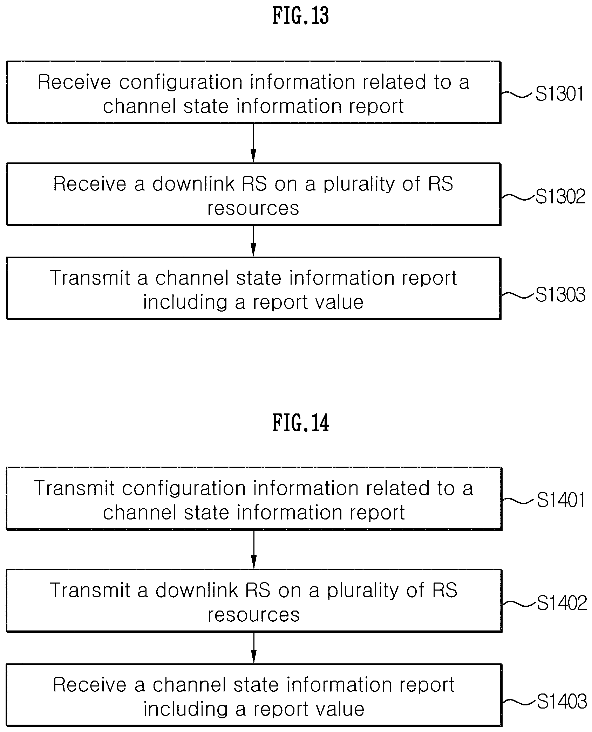

FIG. 13 is a diagram illustrating an operation of a UE for reporting channel state information according to an embodiment of the present disclosure.

FIG. 13 illustrates an operation of a UE based on the operation and detailed embodiments (Embodiments 1 to 4, Proposed Method 1-1, Proposed Method 1-1-1, Proposed Method 1-2) of the previously proposed method 1. The example of FIG. 13 is for convenience of explanation and does not limit the scope of the present disclosure. Some step(s) illustrated in FIG. 13 may be omitted depending on the situation and/or setting. In addition, a UE in FIG. 13 is only an example and may be implemented as a device illustrated in FIG. 15 below. For example, the processor (102/202) of FIG. 15 may control the transceiver (106/206) to transmit and receive channels/signals/data/information, etc., and may also control the transceiver (106/206) to store the channels/signals/data/information to be transmitted or received in the memory (104/204).

In addition, the operation of FIG. 13 may be processed by one or more processors (102, 202) of FIG. 15. In addition, the operation of FIG. 13 may be stored in a memory (e.g., one or more memories (104, 204) of FIG. 15) in the form of a command/program (e.g., an instruction, an executable code) for driving at least one processor (e.g., 102, 202) of FIG. 15.

Although not shown in FIG. 13, a UE may transmit UE capability information related to the reporting timing to a base station. For example, according to the proposed method 1-2, in order to apply the relaxed reporting timing, a separate UE capability value may be defined in addition to the existing L1-RSRP/SINR reporting-related UE capability value, and the UE may report the value to the base station.

Referring to FIG. 13, a UE receives configuration information related to a CSI report from a base station (S1301).

Here, the CSI may include a beam report (e.g., L1-RSRP and/or L1-SINR), and the configuration information related to the CSI report (e.g., CSI-ReportConfig) may correspond to one example of the beam-related configuration information in FIG. 12 above.

Here, the configuration information related to the CSI report (e.g., CSI-ReportConfig) may include 'to-be-turned-on' related indication information (or information) to indicate that the RS(s) will be included in the serving beam (or candidates for the serving beam) (after a predetermined time or a time configured by a base station) and/or 'to-be-turned-off' related indication information (or information) to indicate that the RS(s) will be excluded from the serving beam (or candidates for the serving beam) (after a predetermined time or a time configured by a base station.

For example, as in the above Embodiment 1, the 'to-be-turned-off' and/or 'to-be-turned-on' related (indication) information may be included in the resource related configuration information (e.g., by RRC signaling) for the report (related to L1-RSRP/SINR). In other words, the configuration information related to the CSI report may include information indicating that one or more first RS resources are to-be-turned-on and/or information indicating that one or more second RS resources are to-be-turned-off. For example, it is included in the configuration of resources for channel measurement (e.g., CSI-ResourceConfig) associated with the configuration for the CSI report(e.g., CSI-ReportConfig).

Alternatively, as in the above Embodiment 2, 'to-be-turned-on' related (indication) information may be included in the report related configuration information (e.g., by RRC signaling) (L1-RSRP/SINR related). In other words, the to-be-turned-on information for all of the multiple RS resources related to the CSI report may be transmitted as included in the configuration information related to the CSI report. For example, it may be included in the configuration for the CSI report (e.g., CSI-ReportConfig).

In addition, the configuration information related to the CSI report may further include information on the timing of 'to-be-turned-off' and/or 'to-be-turned-on'. Alternatively, the information on the timing of 'to-be-turned-off' and/or 'to-be-turned-on' may be provided to a UE by configuration information (e.g., by RRC signaling) separate from the 'to-be-turned-off' and/or 'to-be-turned-on' related (indication) information. In other words, the turn-on time for one or more first RS resources and/or the turn-off time for one or more second RS resources may be provided by a base station together with or separately from the to-be-turned-on information and/or the to-be-turned-off information, respectively. Alternatively, the turn-on time for one or more first RS resources and/or the turn-off time for one or more second RS resources may be predetermined/defined in association with the time points at which the to-be-turned-on information and/or the to-be-turned-off information are transmitted, respectively.

A UE receives a downlink RS on a plurality of RS resources from a base station (S1302).

As described above, the beam (or beam RS or RS) may mean a beamformed RS (e.g., SSB, CSI-RS, SRS, etc.) as described above. In addition, the beam (or beam RS or RS) may have different directionality depending on the resource to which it is transmitted, and different resource(s) to which the beamformed RS is transmitted may mean different beams (or beam RS or RS).

That is, A base station transmits the RS to a UE through different beams on multiple resources.

For example, the downlink RS may correspond to either a synchronization signal block (SSB) or a CSI-RS.

A UE transmits a CSI report including a report value calculated based on a downlink RS to a base station (S1303).

Here, the CSI report may include a report value measured considering beam(s) to be changed later according to the 'to-be-turned-off' and/or 'to-be-turned-on' related information. Here, the report value may be derived based on the plurality of RS resources based on the to-be-turned-on information for one or more first RS resources and/or the to-be-turned-off information for one or more second RS resources. Here, the plurality of RS resources may be determined independently of RS resources (i.e., serving beams) associated with downlink and uplink channels for the UE (e.g., QCL relationship).

For example, the report value may correspond to a pair of an identifier of an RS resource (e.g., SSBRI, CRI) and an L1-RSRP or a pair of an identifier of an RS resource (e.g., SSBRI, CRI) and an L1-SINR. In addition, the downlink channel may be a PDCCH or a PDSCH, and the uplink channel may be a PUSCH or a PUSCH.

For example, according to the above Embodiment 1, the plurality of RS resources for calculating the reporting value can be determined based on to-be-turned-on information for one or more first RS resources and/or to-be-turned-off information for one or more second RS resources.

In addition, a priority for deriving the reporting value among the plurality of RS resources may be determined based on information that one or more first RS resources are to-be-turned-on and/or information that one or more second RS resources are to-be-turned-off. For example, when a UE searches for an optimal RS resource (i.e., a beam), RS resource(s) for which 'to-be-turned-on' related (indication) information is configured may have the highest priority, RS resource(s) for which 'to-be-turned-off' related (instruction) information is configured may have the lowest priority, and RS resource(s) for which no (indication) information is configured may have the middle priority.

Here, although not shown in FIG. 13, a UE may receive a MAC CE related to activation/deactivation of RS resources from a base station, and/or a UE may receive DCI triggering CSI reporting from a base station. In this case, information indicating that one or more first RS resources are to-be-turned-on and/or information indicating that one or more second RS resources are to-be-turned-off may be transmitted in the MAC CE or the DCI.

In addition, according to the proposed method 1-2, based on the to-be-turned-on information for one or more first RS resources and/or the to-be-turned-off information for one or more second RS resources being configured in the CSI report, i) a minimum required time (Z' value) from the last symbol of the plurality of RS resources to the start of the CSI report and/or ii) a minimum required time (Z value) from the last symbol of the PDCCH carrying the DCI triggering the CSI report to the start of the CSI report can be determined to be greater (e.g., by adding a specific value) than a CSI report in which the to-be-turned-on information for one or more first RS resources and/or the to-be-turned-off information for one or more second RS resources is not configured. Here, the specific value can be defined/determined differently according to SCS.

FIG. 14 is a diagram illustrating an operation of a base station for reporting channel state information according to an embodiment of the present disclosure.

FIG. 14 illustrates an operation of a base station based on the operation and detailed embodiments (Embodiments 1 to 4, Proposed Method 1-1, Proposed Method 1-1-1, Proposed Method 1-2) of the previously proposed method 1. The example of FIG. 14 is for convenience of explanation and does not limit the scope of the present disclosure. Some step(s) illustrated in FIG. 14 may be omitted depending on the situation and/or setting. In addition, a base station in FIG. 14 is only an example and may be implemented as a device illustrated in FIG. 15 below. For example, the processor (102/202) of FIG. 15 may control the transceiver (106/206) to transmit and receive channels/signals/data/information, etc., and may also control the transceiver (106/206) to store the channels/signals/data/information to be transmitted or received in the memory (104/204).

In addition, the operation of FIG. 14 may be processed by one or more processors (102, 202) of FIG. 15. In addition, the operation of FIG. 14 may be stored in a memory (e.g., one or more memories (104, 204) of FIG. 15) in the form of a command/program (e.g., an instruction, an executable code) for driving at least one processor (e.g., 102, 202) of FIG. 15.

Although not shown in FIG. 14, a base station may receive UE capability information related to the reporting timing from a UE. For example, according to the proposed method 1-2, in order to apply the relaxed reporting timing, a separate UE capability value may be defined in addition to the existing L1-RSRP/SINR reporting-related UE capability value, and the base station may receive the value from the UE.

Referring to FIG. 14, a base station transmits configuration information related to a CSI report from a UE (S1401).

Here, the CSI may include a beam report (e.g., L1-RSRP and/or L1-SINR), and the configuration information related to the CSI report (e.g., CSI-ReportConfig) may correspond to one example of the beam-related configuration information in FIG. 12 above.

Here, the configuration information related to the CSI report (e.g., CSI-ReportConfig) may include 'to-be-turned-on' related indication information (or information) to indicate that the RS(s) will be included in the serving beam (or candidates for the serving beam) (after a predetermined time or a time configured by a base station) and/or 'to-be-turned-off' related indication information (or information) to indicate that the RS(s) will be excluded from the serving beam (or candidates for the serving beam) (after a predetermined time or a time configured by a base station.

For example, as in the above Embodiment 1, the 'to-be-turned-off' and/or 'to-be-turned-on' related (indication) information may be included in the resource related configuration information (e.g., by RRC signaling) for the report (related to L1-RSRP/SINR). In other words, the configuration information related to the CSI report may include information indicating that one or more first RS resources are to-be-turned-on and/or information indicating that one or more second RS resources are to-be-turned-off. For example, it is included in the configuration of resources for channel measurement (e.g., CSI-ResourceConfig) associated with the configuration for the CSI report(e.g., CSI-ReportConfig).

Alternatively, as in the above Embodiment 2, 'to-be-turned-on' related (indication) information may be included in the report related configuration information (e.g., by RRC signaling) (L1-RSRP/SINR related). In other words, the to-be-turned-on information for all of the multiple RS resources related to the CSI report may be transmitted as included in the configuration information related to the CSI report. For example, it may be included in the configuration for the CSI report (e.g., CSI-ReportConfig).

In addition, the configuration information related to the CSI report may further include information on the timing of 'to-be-turned-off' and/or 'to-be-turned-on'. Alternatively, the information on the timing of 'to-be-turned-off' and/or 'to-be-turned-on' may be provided to a UE by configuration information (e.g., by RRC signaling) separate from the 'to-be-turned-off' and/or 'to-be-turned-on' related (indication) information. In other words, the turn-on time for one or more first RS resources and/or the turn-off time for one or more second RS resources may be provided by a base station together with or separately from the to-be-turned-on information and/or the to-be-turned-off information, respectively. Alternatively, the turn-on time for one or more first RS resources and/or the turn-off time for one or more second RS resources may be predetermined/defined in association with the time points at which the to-be-turned-on information and/or the to-be-turned-off information are transmitted, respectively.

A base station transmits a downlink RS to a UE on a plurality of RS resources (S1402).

As described above, the beam (or beam RS or RS) may mean a beamformed RS (e.g., SSB, CSI-RS, SRS, etc.) as described above. In addition, the beam (or beam RS or RS) may have different directionality depending on the resource to which it is transmitted, and different resource(s) to which the beamformed RS is transmitted may mean different beams (or beam RS or RS).

That is, A base station transmits the RS to a UE through different beams on multiple resources.

For example, the downlink RS may correspond to either a synchronization signal block (SSB) or a CSI-RS.

A base station receives a CSI report including a report value calculated based on a downlink RS from a UE (S1403).

Here, the CSI report may include a report value measured considering beam(s) to be changed later according to the 'to-be-turned-off' and/or 'to-be-turned-on' related information. Here, the report value may be derived based on the plurality of RS resources based on the to-be-turned-on information for one or more first RS resources and/or the to-be-turned-off information for one or more second RS resources. Here, the plurality of RS resources may be determined independently of RS resources (i.e., serving beams) associated with downlink and uplink channels for the UE (e.g., QCL relationship).

For example, the report value may correspond to a pair of an identifier of an RS resource (e.g., SSBRI, CRI) and an L1-RSRP or a pair of an identifier of an RS resource (e.g., SSBRI, CRI) and an L1-SINR. In addition, the downlink channel may be a PDCCH or a PDSCH, and the uplink channel may be a PUSCH or a PUSCH.

For example, according to the above Embodiment 1, the plurality of RS resources for calculating the reporting value can be determined based on to-be-turned-on information for one or more first RS resources and/or to-be-turned-off information for one or more second RS resources.

In addition, a priority for deriving the reporting value among the plurality of RS resources may be determined based on information that one or more first RS resources are to-be-turned-on and/or information that one or more second RS resources are to-be-turned-off. For example, when a UE searches for an optimal RS resource (i.e., a beam), RS resource(s) for which 'to-be-turned-on' related (indication) information is configured may have the highest priority, RS resource(s) for which 'to-be-turned-off' related (instruction) information is configured may have the lowest priority, and RS resource(s) for which no (indication) information is configured may have the middle priority.

Here, although not shown in FIG. 14, a base station may transmit a MAC CE related to activation/deactivation of RS resources to a UE, and/or a base station may transmit DCI triggering CSI reporting to a UE. In this case, information indicating that one or more first RS resources are to-be-turned-on and/or information indicating that one or more second RS resources are to-be-turned-off may be transmitted in the MAC CE or the DCI.

In addition, according to the proposed method 1-2, based on the to-be-turned-on information for one or more first RS resources and/or the to-be-turned-off information for one or more second RS resources being configured in the CSI report, i) a minimum required time (Z' value) from the last symbol of the plurality of RS resources to the start of the CSI report and/or ii) a minimum required time (Z value) from the last symbol of the PDCCH carrying the DCI triggering the CSI report to the start of the CSI report can be determined to be greater (e.g., by adding a specific value) than a CSI report in which the to-be-turned-on information for one or more first RS resources and/or the to-be-turned-off information for one or more second RS resources is not configured. Here, the specific value can be defined/determined differently according to SCS.

### General Device to which the Present Disclosure may be applied

FIG. 15 is a diagram which illustrates a block diagram of a wireless communication device according to an embodiment of the present disclosure.

In reference to FIG. 15, a first wireless device 100 and a second wireless device 200 may transmit and receive a wireless signal through a variety of radio access technologies (e.g., LTE, NR) .

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method performed by a user equipment (UE) in a wireless communication system, the method comprising:
receiving, from a base station, configuration information related to a channel state information (CSI) report;
receiving, from the base station, a downlink RS on a plurality of reference signal (RS) resources; and
transmitting, to the base station, the CSI report including a report value calculated based on the downlink RS,
wherein the report value is derived based on the plurality of RS resources based on information indicating that one or more first RS resources are to-be-turned-on and/or information indicating that one or more second RS resources are to-be-turned-off.

2. The method of claim 1, wherein the information indicating that the one or more first RS resources are to-be-turned-on and/or the information indicating that the one or more second RS resources are to-be-turned-off are included in resource configuration information associated with the configuration information.

3. The method of claim 2, wherein the plurality of RS resources are determined based on the information indicating that the one or more first RS resources are to-be-turned-on and/or the information indicating that the one or more second RS resources.

4. The method of claim 2, wherein a priority for deriving the report value within the plurality of RS resources is determined based on the information indicating that the one or more first RS resources are to-be-turned-on and/or the information indicating that the one or more second RS resources.

5. The method of claim 1, wherein the to-be-turned-on information for all of the plurality of RS resources related to the CSI report is included in the configuration information.

6. The method of claim 1, wherein turning-on time for the one or more first RS resources and/or turning-off time for the one or more second RS resources are respectively predetermined in association with a time at which the to-be-turned-on information and/or the to-be-turned-off information is transmitted.

7. The method of claim 1, wherein turning-on time for the one or more first RS resources and/or turning-off time for the one or more second RS resources are respectively provided by the base station together with or separately from the to-be-turned-on information and/or the to-be-turned-off information.

8. The method of claim 1, wherein based on the information indicating that the one or more first RS resources are to-be-turned-on and/or the information indicating that the one or more second RS resources are to-be-turned-off being configured for the CSI report, i) a minimum required time from a last symbol of the plurality of RS resources to a start of the CSI report and/or ii) a minimum required time from a last symbol of a physical downlink control channel (PDCCH) carrying downlink control information (DCI) that triggers the CSI report to a start of the CSI report is determined by adding a specific value compared to a CSI report in which the information indicating that the one or more first RS resources are to-be-turned-on and/or the information indicating that the one or more second RS resources are to-be-turned-off are not configured.

9. The method of claim 8, wherein the specific value is determined differently according to subcarrier spacing (SCS).

10. The method of claim 1, wherein the information indicating that the one or more first RS resources are to-be-turned-on and/or the information indicating that the one or more second RS resources are to-be-turned-off is included in a medium access control (MAC) control element (CE) related to activation/deactivation of a RS resource or downlink control information (DCI) that triggers the CSI report.

11. The method of claim 1, wherein the report value is a pair of an identifier of an RS resource and a Layer 1 reference signal received power (L1-RSRP) or a pair of an identifier of an RS resource and a Layer 1 signal to interference and noise ratio (L1-SNIR).

12. The method of claim 1, wherein the downlink RS corresponds to one of a synchronization signal block (SSB) and a CSI-RS.

13. The method of claim 1, wherein the downlink channel is a physical downlink control channel (PDCCH) or a physical downlink shared channel (PDSCH), and the uplink channel is a physical uplink control channel (PUSCH) or a physical uplink shared channel (PUSCH).

14. A user equipment (UE) operating in a wireless communication system, the UE comprising:
at least one transceiver for transmitting and receiving a wireless signal; and
at least one processor for controlling the at least one transceiver,
wherein the at least one processor configured to:
receive, from a base station, configuration information related to a channel state information (CSI) report;
receive, from the base station, a downlink RS on a plurality of reference signal (RS) resources; and
transmit, to the base station, the CSI report including a report value calculated based on the downlink RS,
wherein the report value is derived based on the plurality of RS resources based on information indicating that one or more first RS resources are to-be-turned-on and/or information indicating that one or more second RS resources are to-be-turned-off.

15. At least one non-transitory computer-readable medium storing at least one instruction, wherein the at least one instruction executable by at least one processor controls a user equipment (UE) to:
receive, from a base station, configuration information related to a channel state information (CSI) report;
receive, from the base station, a downlink RS on a plurality of reference signal (RS) resources; and
transmit, to the base station, the CSI report including a report value calculated based on the downlink RS,
wherein the report value is derived based on the plurality of RS resources based on information indicating that one or more first RS resources are to-be-turned-on and/or information indicating that one or more second RS resources are to-be-turned-off.

16. A processing apparatus configured to control a user equipment (UE) in a wireless communication system, the processing apparatus comprising:
at least one processor; and
at least one computer memory operably connected to the at least one processor and storing instructions that, based on being executed by the at least one processor, perform operations comprising:
receiving, from a base station, configuration information related to a channel state information (CSI) report;
receiving, from the base station, a downlink RS on a plurality of reference signal (RS) resources; and
transmitting, to the base station, the CSI report including a report value calculated based on the downlink RS,
wherein the report value is derived based on the plurality of RS resources based on information indicating that one or more first RS resources are to-be-turned-on and/or information indicating that one or more second RS resources are to-be-turned-off.

17. A method performed by a base station in a wireless communication system, the method comprising:
transmitting, to a user equipment (UE), configuration information related to a channel state information (CSI) report;
transmitting, to the UE, a downlink RS on a plurality of reference signal (RS) resources; and
receiving, from the UE, the CSI report including a report value calculated based on the downlink RS,
wherein the report value is derived based on the plurality of RS resources based on information indicating that one or more first RS resources are to-be-turned-on and/or information indicating that one or more second RS resources are to-be-turned-off.

18. A base station operating in a wireless communication system, the base station comprising:
at least one transceiver for transmitting and receiving a wireless signal; and
at least one processor for controlling the at least one transceiver,
wherein the at least one processor configured to:
transmit, to a user equipment (UE), configuration information related to a channel state information (CSI) report;
transmit, to the UE, a downlink RS on a plurality of reference signal (RS) resources; and
receive, from the UE, the CSI report including a report value calculated based on the downlink RS,
wherein the report value is derived based on the plurality of RS resources based on information indicating that one or more first RS resources are to-be-turned-on and/or information indicating that one or more second RS resources are to-be-turned-off.
